# EUROPÄISCHE PATENTSCHRIFT

(11) **EP 3 159 380 B1**
(45) Veröffentlichungstag und Bekanntmachung des Hinweises auf die Patenterteilung: **07.08.2019**
(21) Anmeldenummer: 16002113.5
(22) Anmeldetag: 30.09.2016
(51) Int. Cl.: C09C 1/00, C04B 41/86, C03C 8/14, C03C 17/22, C03C 3/091, C03C 8/02, C04B 41/00, C04B 41/50, C09D 1/00, C09D 5/03, C09D 5/36

(54) **PIGMENT/FRITTEN-GEMISCH**
PIGMENT / FRIT MIXTURE
MÉLANGE PIGMENT/FRITTES

(30) Priorität: 19.10.2015 DE 102015013400
(43) Veröffentlichungstag der Anmeldung: 26.04.2017
(73) Patentinhaber: Merck Patent GmbH, 64293 Darmstadt (DE)
(72) Erfinder: Hamm, Lukas, 64853 Otzberg (DE); Handrosch, Carsten, 64372 Ober-Ramstadt (DE); Nelischer, Nicole, 64401 Gross-Bieberau (DE)

(56) Entgegenhaltungen:
- EP-A1- 0 419 843
- CN-A- 101 462 895
- US-A- 5 783 506
- US-B2- 7 763 557

## Beschreibung

Die Erfindung betrifft Fritten bzw. Frittengemische mit Perlglanzpigmenten für keramische Glasuren, die oberhalb von 1.000 °C stabil sind.

In der Regel werden für dekorative Anwendungen in keramischen Glasuren Mischungen aus Pigmenten, z.B. Effektpigmente, und keramischen Fritten/Frittengemischen eingesetzt. Insbesondere beim Einsatz für keramische Glasuren im Hochtemperatur-Bereich oberhalb von 1.000 °C, z.B. für
Wandfliesen im Einfachbrand bei 1.100 - 1.200 °C,
Bodenfliesen im Einfachbrand bei 1.100 - 1.250 °C,
Porzellan bei 1.100 - 1.300 °C, sowie im Zweifachbrand bei 1.050 - 1.080 °C, wie sie gerade auch bei Dekor-Fliesen bzw. Porzellan eingesetzt werden, tritt das Problem auf, dass die Pigmente, insbesondere die Vertreter aus der Klasse der Perlglanzpigmente, die aggressiven Bedingungen bestehend aus oxidischer Schmelze (Frittenkomponenten) und hohen Temperaturen während des Brennprozesses in der Regel nicht unbeschadet überstehen.

Es gab daher in der Vergangenheit Bemühungen, die Effektpigmente, insbesondere Perlglanzpigmente, durch Umhüllung mit isolierenden Schutzschichten für solche thermisch und chemisch höchst anspruchsvollen Anwendungen zu stabilisieren.

Aus dem Stand der Technik ist bekannt, dass beim Einsatz von Perlglanzpigmenten in keramischen Glasuren im Einsatzbereich von > 1.000 °C mit einem deutlichem Verlust der Farbkraft und des Perlglanzeffektes gerechnet werden muss. Um dies zu vermeiden müssen diese Pigmente entweder in zusätzlichen Schutzschichten verkapselt sein, oder aber der Einsatz von Perlglanzpigmenten ist in diesem Hochtemperatur-Anwendungsgebiet auf Eisenoxid-beschichtete Perlglanzpigmente in speziell modifizierten Engoben oder Flüssen limitiert.

In der EP 220 509 A1 wird beispielsweise die Stabilisierung von Perlglanzpimenten mittels SnO₂ und/oder CeO₂-Schichten beschrieben.

Aus der EP 307 771 A1 ist die Verkapselung von Perlglanzpigmenten mit Au-dotierten SnO₂-Schichten zur Kombination aus Stabilisierung und neuen dekorativen Effekten bekannt. Um die gewünschte Stabilisierung zu erreichen, sind in beiden Fällen substantielle Mengen der erwähnten Oxide / Oxid-Kombinationen aufzubringen. So hat es sich als zweckmäßig erwiesen, die Schutzbeschichtung in Mengen von etwa 5 - 30 Gew.-% bezogen auf das Gesamtpigment aufzubringen.

In der DE 39 32 424 C1 werden Perlglanzpigment / Fritten-Kombinationen mit und ohne zusätzliche Absorptivpigmente offenbart. Der Einsatzbereich der pigmentierten Glasfritte liegt allerdings nur bei maximal 700-900 °C.

In der GB 2 096 592 A wird die Verwendung von Perlglanzpigmenten in keramischen Flüssen enthaltend Fritten beschrieben. Dabei wird weder auf die Ziel-Einbrenntemperatur eingegangen, noch auf die besonderen Probleme bei der Verwendung von Perlglanzpigmenten bei Temperaturen von > 1.000 °C.

In dem U.S.-Patent 5,783,506 wird die Verwendung von TiO₂-oder Fe₂O₃-beschichtetem Glimmerpigmenten in "leafing"-fähigen Keramik-Flüssen, d.h. Formulierungen bestehend aus Fritte, Dispergiermittel, Bindemittel, Glimmer und Perlglanzpigment basierend auf Glimmer, einer definierten Viskosität beschrieben. Die Erfindung in diesem US-Patent besteht darin, dass die Perlglanzpigmente durch den Zusatz von Glimmer an die Oberfläche der Glasur wandern (leafing).

Aus der US 4,353,991 ist der Einsatz von Perlglanzpigmenten der Teilchengröße 1-200 µm in "fritted glass enamel" in einem Konzentrationsbereich von 0,5 bis 25,0 Gew.% bezogen auf die Masse der Fritten/Pigment-Mischung bekannt. Allerdings ist der Einsatzbereich diese Gemische nur bei Temperaturen bis maximal 538-760 °C möglich.

EP 0 419 843 A1 beschreibt den Einsatz von Perlglanzpigmenten in einer Einsatzkonzentration von 5-20 Gew.% in einer Glasfritte. Für die Einsatztemperatur sind 800-900 °C für den Schnellbrand bzw. 700-800 °C für den Normalbrand genannt.

In der CN 101462895A wird der Einsatz von 10-60 Gew.% von goldenen Perlglanzpigmenten in Glasuren bei 1.000 - 1.200 °C offenbart. Die eingesetzte Fritte setzt sich hierbei zusammen aus

| | |
|---|---|
| SiO₂: | 55 ∼ 80 % |
| Al₂O₃: | 5 ∼ 20 % |
| CaO: | 0.5 - 3 % |
| MgO: | 0 - 2 % |
| Na₂O: | 1 ∼ 5 % |
| K₂O: | < 5 % |
| B₂O₃: | 3 ∼ 15 %. |

Von Nachteil ist hier, dass der Einsatz ausschließlich auf spezielle goldfarbene Perlglanzpigmente basierend auf Glimmer beschränkt ist, wobei der Schichtaufbau der goldfarbenen Perlglanzpigmente nicht offenbart ist. Die Anzahl und Farbauswahl der einsetzbaren Pigmente ist in der CN 101462895A somit sehr stark eingeschränkt.

Aus der DE 198 59 420 A1 sind modifizierte Engoben mit Perlglanzeffekt bekannt. Die Beschichtung von Ton- und Keramikwaren zur Verbesserung (Grundierung) der Oberfläche durch Feinheit oder Farbe erfolgt üblicherweise mit Engoben. Durch die modifizierten Engoben wird eine bessere Haftung der Engobe auf dem gebrannten oder ungebrannten Ziegel, Ton- und Keramikwaren erreicht. Die Engobe enthält eine Fritte für den Brennbereich von 600-1200 °C und eine oder mehrere Perlglanzpigmente.

Die aus dem Stand der Technik bekannten Lösungen, wie z.B. das Einkapseln der Pigmente, ist aufwendig in der Herstellung, da in der Produktion ein weiterer Verfahrensschritt zur Aufbringung der Schutzschicht erfolgen muss. Zudem kann es je nach Zusammensetzung der Schutzschicht zu nachteiligen Effekten, wie z.B. Eintrübung der Glasur und Farbveränderungen im Pigment bzw. schlechter Steuerung des Farbeffektes im Anwendungsmedium kommen. Die zweite Lösung - der Einsatz von Perlglanzpigmenten mit Eisenoxid-Schicht - ist farblich sehr auf die Farbeffekte limitiert, welche durch Eisenoxid-beschichtete Perlglanzpigmente erzielbar sind.

Es bestand daher die Aufgabe eine insbesondere aus anwendungstechnischer Sicht verlässliche und gut steuerbare Kombination aus Fritte und Perlglanzpigment, zu finden, die bei Temperaturen oberhalb von 1.000 °C stabil ist und gleichzeitig zu einer optimalen planparallelen Ausrichtung der Perlglanzpigmente in der Glasur führt und damit die Farbwirkung von Perlglanzpigmenten beim Einsatz für keramische Glasuren im Hochtemperatur-Bereich, d.h. bei Temperaturen > 1.000 °C, deutlich verbessert. Ferner sollte das erfindunsggemäß einsetzbare Farbspektrum um TiO₂-Interferenz-Silberweiß, TiO₂-Interferenzfarben (Gold, Kupfer, Rot, Violet, Blau, Türkis und Grün), sowie Eisenoxid-Interferenzfarben im Gold-, Bronze-, Kupfer- und Rot-Bereich deutlich erweitert werden.

Überraschenderweise wurde nun gefunden, dass in Fritten-/ Perlglanzpigment-Kombinationen mit Al₂O₃-reichen Fritten, sog. "harten" Fritten, Perlglanzpigmente basierend auf plättchenförmigem Substraten im Einsatzbereich von Temperaturen > 1.000 °C besonders stabil sind und somit besonders attraktive und leicht steuerbare Farbeffekte erzielt werden.

Gegenstand der vorliegenden Erfindung ist daher gemäß Anspruch 1 ein Perlglanzpigment/Fritten-Gemisch, wobei der Anteil an Perlganzpigment im Gemisch 5 - 95 Gew.% beträgt bezogen auf das Gemisch und die Fritte mindestens 5 % Al₂O₃ enthält.

Die Verwendung von "harten" Fritten führt zu einer deutlich verbesserten planparallelen Orientierung der Perlganzpigmente innerhalb der Glasur und damit zu einem optimierten optischen Effekt der Glasur, insbesondere was Farbe und Glanz betrifft. Die optimierte planparallele Orientierung der Perlglanzpigmente wird dabei weiterhin durch die erfindungsgemäße Kombination aus Perlglanzpigment und harter Fritte unterstützt und ermöglicht eine hohe Pigment-Einsatzkonzentration von > 30 Gew.%, vorzugsweise > 50 Gew.% und insbesondere 60-95 %. Weiterhin ermöglicht das für den Zieltemperaturbereich in der Anwendung optimierte erfinderische Pigment/Fritten-Gemisch dem Anwender eine verlässliche Einsetzbarkeit der Perlglanzpigmente in keramischen Glasuren, welche aufgrund der Farbkonstanz einhergeht mit einer leichten Einstellbarkeit des Farbeffektes.

Das erfindungsgemäße Perlglanzpigment/Fritten-Gemisch ermöglicht weiterhin, dass das Farbspektrum um TiO₂-Interferenzpigmente mit attraktiven Silberweiß- und Farb-Interferenz-Tönen, sowie um Fe₂O₃-Interferenzpigmente mit Körperfarben, Gold-, Bronze, -Kupfer-, sowie Rot-Tönen erweitert wird. Schließlich ermöglicht diese für den Zieltemperaturbereich in der Anwendung optimierte erfinderische Kombination dem Anwender eine verlässliche Einsetzbarkeit dieser Pigmente.

Wenn der Pigment-Gewichtsanteil im Perlglanzpigment/Fritten-Gemisch 5 - 95 Gew. %, besonders bevorzugt 20 - 85 Gew. % und insbesondere 30 - 80 Gew.%, bezogen auf das Pigment/Fritten-Gemisch, beträgt, zeigen die Perlglanzpigmente in der sogenannten "harten" Fritte mit einem Al₂O₃-Gehalt von ≥ 5 Gew.% bezogen auf die Fritte, eine ausgeprägte gut plan-parallele Orientierung der einzelnen Perlglanzpigmentpartikel.

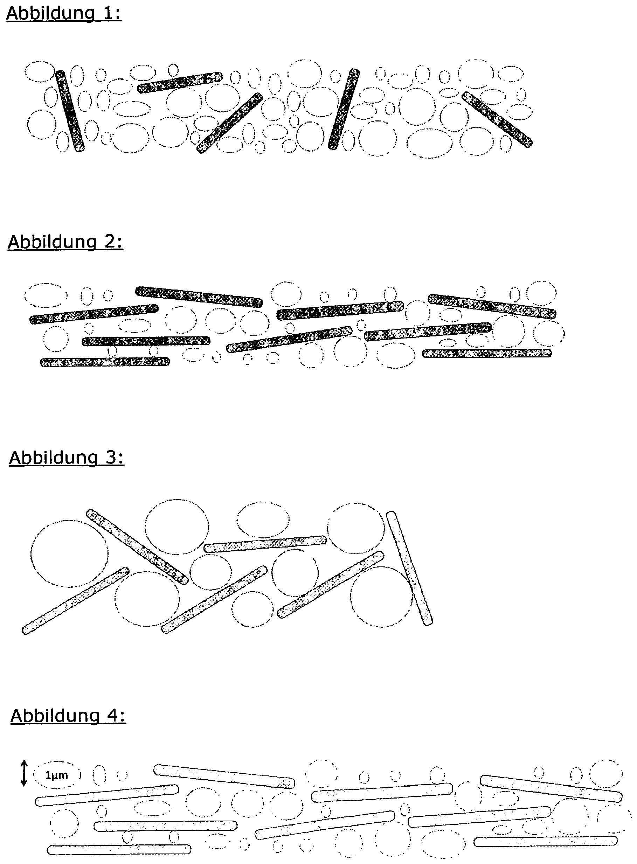

Bei einer vorgegebenen Schichtdicke und vergleichbaren Korngrößen wird durch eine hohe Pigmentierung der Fritte die annähernd planparallele Ausrichtung begünstigt, welche sich in einem deutlich stärkeren Perlglanzeffekt auswirkt. Bei geringerer Pigment-Konzentration liegt eine statistische Verteilung der Orientierung vor, wie in den Abbildungen 1 und 2 dargestellt. In diesen beiden Abbildungen, welche seitliche Schnittbilder durch eine pigmentierte Fritten-Schicht vor dem Brennvorgang darstellen, sind die Partikel der Fritte als runde oder ovale Teilchen dargestellt und die Perlglanzpigmente als Stäbchen.

Die für die Optimierung des Farbeffektes vorteilhafte, möglichst planparallele Orientierung der Perlglanzpigmente kann weiterhin zusätzlich begünstigt werden, wenn das Verhältnis Dicke des Perlglanzpigmentes zur Größe des Fritten-Teilchens im Mittel in mindestens einer Dimension 0,01 - 2, insbesondere 0,5 - 1,5 und ganz besonders 1 beträgt. Die Fritten-Teilchen sind dabei in der Regel plättchenförmig (definiert durch ein aspect-ratio = Verhältnis Partikel-Durchmesser zu Partikel-Dicke ≥ 4:1), kugelig, oval oder sind unregelmäßig geformt. Entscheidend für die Ausrichtung ist die Abmessung in mindestens einer Dimension.

Wenn beispielsweise das Perlglanzpigment eine Dicke von 700 nm aufweist, sollte es vorzugsweise mit Frittenteilchen gemischt werden, die folgende Dimensionen aufweisen: plättchenförmige Fritten mit einer Dicke von 700 nm, kugelförmige Fritten mit einem Durchmesser von 700 nm oder ovale bzw. unregelmäßig geformte Frittenpartikel mit einer mittleren Teilchengröße von 700 nm.

Bevorzugte Dimensionen von Fritte und Perlglanzpigment werden nachfolgend an einigen exemplarischen Beispielen genannt:
1) Pigmentdicke: 800 nm, Größe des Frittenteilchen in mindestens einer Dimension 800 nm, Verhältnis: 1
2) Pigmentdicke: 800 nm, Größe des Frittenteilchen in mindestens einer Dimension 1600 nm, Verhältnis: 0,5
3) Pigmentdicke: 800 nm, Größe des Frittenteilchen in mindestens einer Dimension 400 nm , Verhältnis: 2
4) Pigmentdicke: 1600 nm, Größe des Frittenteilchen in mindestens einer Dimension 1600 nm, Verhältnis: 1
5) Pigmentdicke: 1600 nm, Größe des Frittenteilchen in mindestens einer Dimension 3200 nm, Verhältnis: 0,5
6) Pigmentdicke: 1600 nm, Größe des Frittenteilchen in mindestens einer Dimension 800 nm, Verhältnis: 2.

Bei Werten größer 2 ist in der Regel keine essentielle Verbesserung bei der Orientierung der Pigmentteilchen zu erkennen. Wobei die für den gewünschten intensiven Perlglanzeffekt günstige planparallele Orientierung der Perlglanzpigmente in der Glasur umso weniger gestört wird, je kleiner die Fritten-Partikel im Mittel in Relation zu den Pigmentpartikeln sind, wie in den Abbildungen 3-5 schematisch dargestellt ist. Zudem wirken sich plättchenförmige Frittenteilchen generell sehr positiv auf die planparallele Ausrichtung der ebenfalls plättchenförmigen Perlglanzpigmente aus. In den Abbildungen stellen die ovalen oder runden Partikel die Frittenteilchen dar, während es bei den Stäbchen sich um die Perlglanzpigmente basierend auf plättchenförmigen Substraten handelt.

Der Einsatz von groben Fritten, wie in Abbildung 3 dargestellt, führt zu einer Desorientierung, während der in den Abbildungen 4 und 5 schematisch dargestellte Einsatz einer feineren Fritte, d.h., die Frittenteilchen sind in mindestens einer Dimensionen her kleiner als oder annähernd gleichgroß wie die Perlglanzpigmentteilchen, was in der Regel zu einer sehr guten Orientierung der Perlglanzpigmente führt. Bei feineren Fritten besitzen die Frittenteilchen vorzugsweise Dimensionen in der Größenordnung der Pigmentdicken, d.h. 10-2.000 nm und inbesondere 50-1.500 nm.

Wie bereits erwähnt wird die optimale planparallele Orientierung der Perlglanzpigmente durch die erfindungsgemäße Kombination aus Perlglanzpigment und harter Fritte unterstützt, indem diese besonders hohe Pigment-Einsatzkonzentration von > 30 Gew.% unterstützt. Der Effekt steigt dabei in der Regel mit zunehmender Pigmentkonzentration sukzessive von ≥ 30 Gew.%, über ≥ 50 Gew.% bis hin zu ≥ 90 Gew.% an und wird nur limitiert durch die einsetzende Kreidung des Pigmentes aus der Glasur bei zu niedrigem Frittenanteil.

Neben der optimalen Ausrichtung der einzelnen Perlglanzpigmentteilchen spielt weiterhin die Temperaturstabilität sowie die Stabilität gegenüber chemisch hochreaktivem Medium (der Frittenschmelze) eine entscheidende Rolle für den Einsatz des Pigment/Fritten-Gemisches. Durch die Verwendung von Al₂O₃-haltigen Fritten wird die Temperaturstabilität deutlich erhöht. Der Al₂O₃-Anteil in der Fritte beträgt vorzugsweise ≥ 5 Gew.%, insbesondere ≥ 7 Gew.% und ganz besonders bevorzugt ≥ 9 Gew.% bezogen auf die Fritte.

Die kommerziell erhältlichen Fritten setzen sich üblicherweise zusammen aus Fritten-üblichen Bestandteilen, wie z.B. Al₂O₃, SiO₂, B₂O₃, TiO₂, ZrO₂, Sb₂O₃, P₂O₅, Fe₂O₃, Alkalioxide und Erdalkalioxide.

Bevorzugte Fritten enthalten
- (Na₂O + K₂O + Li₂O) < 10 Gew.%
- Al₂O₃ > 5 Gew.%
- SiO₂ > 50 Gew.%
wobei der Gesamtanteil aller Bestandteile der Fritte 100 % beträgt.

Geeignete Fritten mit einem Anteil von Al₂O₃ ≥ 5 Gew.% bezogen auf die Fritte sind kommerziell erhältlich. Als Beispiel, ohne dabei die Anzahl der einsetzbaren Fritten/Flüsse einzuschränken, seien FLUX 101911, FLUX DSDC101915, Fritte DA4193 oder Fritte DA4113 von Ferro genannt.

Die Temperaturstabilität kann - rein optional - weiterhin erhöht werden, wenn das erfindungsgemäße Pigment/Fritten-Gemisch auf eine zuvor auf dem das Werkstück (Scherben) aufgebrachte Engobe eingesetzt wird. Engoben sind Gemische, die geschmolzene keramische Fritten, keramische Rohstoffe bzw. Mineralien, Glas- bzw. Geschirrporzellanmehl und anorganische Trübungsmittel enthalten können. Diese Engoben können in gemahlener Form als wäßrige Suspensionen (Schlicker) auf keramische Substrate aufgetragen werden, um den Farbton des Substrates zu maskieren und die Verarbeitung der nachfolgenden Überzüge oder Schichten zu verbessern, ohne daß gleichzeitig die Haftung oder die Oberflächenqualität des Fertigproduktes negativ beeinflußt wird. Durch die Verwendung der Engobe steigt die Einsatztemperatur noch einmal um 40 - 80 K, z.B. von 1120-1160 °C auf 1180-1200 °C.

Verzugsweise kann das erfindungsgemäße Perlglanzpigment/ Fritten-Gemisch aber auch direkt auf das Werkstück eingebrannt werden und zeigt dann hochchromatische Farbeffekte im hohen Zieltemperaturbereich, d.h. bei 1150 - 1200 °C. Damit ergibt sich der zusätzliche Vorteil, dass das Farbdekor mit nur einem Druckschritt auf das Werkstück aufgebracht werden kann, während für die Engobe ein zweiter Druckschritt nötig wäre.

Schließlich wird in der Regel eine besonders hohe Temperaturstabilität erreicht, wenn man Perlglanzpigmente verwendet, die auf hochtemperaturstabilen, plättchenförmigen Substraten basieren. Als Beispiele seien hier genannt: Korund - Al₂O₃, Karborund - SiC, Bornitrid - BN, Graphit und Hämatit - Fe₂O₃.

Es können auch Gemische unterschiedlicher Substrate oder Gemische gleicher Substrate mit unterschiedlichen Partikelgrößen eingesetzt werden. Die Substrate können in jedem MassenVerhältnis miteinander gemischt werden. Vorzugsweise werden 10 : 1 bis 1 : 10-Gemische eingesetzt, insbesondere 1 : 1-Gemische. Besonders bevorzugt sind Substratgemische bestehend aus Substratplättchen mit unterschiedlichen Partikelgrößen, insbesondere Gemische aus S-Fraktion (10-200 µm), N-Fraktion (10 - 60 µm) und F-Fraktion (5 - 25 µm), aber auch aus F-Fraktion (5 - 25 µm) und M-Fraktion (1 - 15 µm).

Die Größe der Basissubstrate ist an sich nicht kritisch und kann auf den jeweiligen Anwendungszweck und gewünschten Zieleffekt/Zieltextur abgestimmt werden: etwa seidig glänzend oder stark glitzernd.

In der Regel haben die plättchenförmigen Substrate eine Dicke von 0,05 - 5 µm, vorzugsweise 0,1 - 2 µm, insbesondere von 0,1 - 1 µm. Die Ausdehnung in den beiden anderen Bereichen beträgt üblicherweise 1 -500 µm, vorzugsweise 1 - 250 µm, und insbesondere 1 - 60 µm.

Die Dicke mindestens einer einzelnen Schicht auf dem Basissubstrat des Perlglanzpigmentes ist wesentlich für die optischen Eigenschaften des Pigments, wie bereits beschrieben in zahlreichen Patenten und Patentanmeldungen, z.B in DE 14 67 468, DE 19 59 988, DE 20 09 566, DE 22 14 545, DE 22 15 191, DE 22 44 298, DE 23 13 331, DE 25 22 572, DE 31 37 808, DE 31 37 809, DE 31 51 343, DE 31 51 354, DE 31 51 355, DE 32 11 602, DE 32 35 017 oder auch in weiteren dem Fachmann bekannten Patentdokumenten und sonstigen Publikationen.

Das Pigment muss mindestens eine optisch aktive Schicht aufweisen, vorzugsweise eine hochbrechende Schicht (z.B. TiO₂, Fe₂O₃, SnO₂, etc.). Unter hochbrechenden Schichten sind hier alle Schichten zu verstehen, die einen Brechungsindex von n ≥ 1,8, vorzugsweise von n ≥ 2,0, besitzen.

Ganz besonders bevorzugt werden in dem erfindungsgemäßen Perlglanzpigment/Fritten-Gemisch Perlglanzpigmente basierend auf synthetischen Glimmerplättchen, natürlichen Glimmerplättchen und ganz besonders bevorzugt basierend auf hochtemperaturbeständigen Plättchen, wie z.B. Al₂O₃-, SiC-, B₄C-, BN-, Graphit-, TiO₂ und Fe₂O₃-Plättchen eingesetzt.

Geeignete Substrat-Plättchen für die Perlglanzpigmente können dotiert oder undotiert sein. Sofern sie dotiert sind, handelt es sich bei der Dotierung vorzugsweise um Al, N, B, Ti, Zr, Si, In, Sn, oder Zn bzw. deren Gemische. Ferne können weitere Ionen aus der Gruppe der Übergangsmetalle (V, Cr, Mn, Fe, Co, Ni, Cu, Y, Nb, Mo, Hf, Ta, W) und Ionen aus der Gruppe der Lanthaniden als Dotierstoffe dienen.

Im Falle von Al₂O₃ ist das Substrat vorzugsweise undotiert oder mit TiO₂ , ZrO₂ oder ZnO dotiert. Bei den Al₂O₃-Plättchen handelt es sich vorzugsweise um Korund. Geeignete Al₂O₃-Plättchen sind vorzugsweise dotierte oder undotierte α-Al₂O₃-Plättchen, insbesondere mit TiO₂ dotierte α-Al₂O₃-Plättchen. Sofern das Substrat dotiert ist, beträgt der Anteil der Dotierung vorzugsweise 0,01 - 5,00 Gew.%, insbesondere 0,10 - 3,00 Gew.% bezogen auf das Substrat.

Geeignete Al₂O₃-Plättchen besitzen eine Äquivalenzdurchmesser-Verteilung, nach der 90 % der Teilchen im Bereich von 5-45 µm, vorzugsweise 5-40 µm, liegen.

Die D₅₀-Werte der Al₂O₃-Plättchen liegen vorzugsweise im Bereich von 15-30 µm, ganz besonders bevorzugt im Bereich von 15-25 µm.

Die D₁₀-Werte liegen vorzugsweise im Bereich von 5-15 µm, ganz besonders bevorzugt im Bereich von 6-10 µm.

In der gesamten Anmeldung werden die D₁₀-, D₅₀- und D₉₀-Werte bestimmt mit Malvern MS 2000.

Die Dicke der Al₂O₃-Plättchen beträgt vorzugsweise 50 - 1200 nm vorzugsweise 150-800 nm und insbesondere 200-450 nm.

In einer ganz besonders bevorzugten Ausführungsform beträgt die Dicke der Al₂O₃-Plättchen < 500 nm, vorzugsweise 150-450 nm und insbesondere 150-400 nm.

Vorzugsweise beträgt der Formfaktor (aspect ratio: Durchmesser/Dicke-Verhältnis) der Al₂O₃-Plättchen 10-1000, insbesondere 50-500.

In einer weiteren bevorzugten Ausführungsform beträgt der Formfaktor der Al₂O₃-Plättchen 30-200, insbesondere 50-150.

In einer bevorzugten Ausführungsform ist das plättchenförmige Substrat mit einer oder mehreren transparenten, semitransparenten und/oder opaken Schichten enthaltend Metalloxide, Metalloxidhydrate, Metallsilikate, Metallsuboxide, Metalle, Metallfluoride, Metallnitride, Metalloxynitride oder Mischungen dieser Materialien beschichtet. Die Metalloxid-, Metalloxidhydrat-, Metallsilikat-, Metall-suboxid-, Metall-, Metallfluorid-, Metallnitrid-, Metalloxynitridschichten oder die Mischungen hieraus können niedrig- (Brechzahl < 1.8) oder hochbrechend (Brechzahl ≥ 1.8) sein. Als Metalloxide und Metalloxidhydrate eignen sich alle dem Fachmann bekannten Metalloxide oder Metalloxidhydrate, wie z. B. Aluminiumoxid, Aluminiumoxidhydrat, Siliziumoxid, Siliziumoxidhydrat, Eisenoxid, Zinnoxid, Ceroxid, Zinkoxid, Zirkoniumoxid, Chromoxid, Zirkonsilikat ZrSiO₄, Mullit, Titanoxid, insbesondere Titandioxid, Titanoxidhydrat sowie Mischungen hieraus, wie z.B. Ilmenit oder Pseudobrookit. Als Metallsuboxide können beispielsweise die Titansuboxide (z.B. Ti₂O₃ oder γ-Ti₃O₅) eingesetzt werden. Als Metallsilikate eignen sich Aluminiumsilikat, Mg-, Ca-, Ba-Silikat; Gemisch-Erdalkalisilikate, wie z.B., Ca-Mg-Silikat, Zr-Silikat oder Gemische aus den genannten Silikaten. Als Metalle eignen sich z.B. Chrom, Aluminium, Nickel, Silber, Gold, Titan, Kupfer oder Legierungen, als Metallfluorid eignet sich beispielsweise Magnesiumfluorid. Als Metallnitride oder Metalloxynitride können beispielsweise die Nitride oder Oxynitride der Metalle Titan, Zirkonium und/oder Tantal eingesetzt werden. Bevorzugt sind Metalloxid-, Metall-, Metallfluorid- und/oder Metalloxid-hydratschichten und ganz besonders bevorzugt Metalloxid- und/oder Metalloxidhydratschichten auf den Träger aufgebracht. Weiterhin können auch Mehrschichtaufbauten aus hoch- und niedrigbrechenden Metalloxid-, Metalloxidhydrat-, Metall- oder Metallfluoridschichten vorliegen, wobei sich vorzugsweise hoch- und niedrigbrechende Schichten abwechseln. Insbesondere bevorzugt sind Schichtpakete aus einer hoch- und einer niedrigbrechenden Schicht, wobei auf dem Träger eine oder mehrere dieser Schichtpakete aufgebracht sein können. Die Reihenfolge der hoch- und niedrigbrechenden Schichten kann dabei an den Träger angepasst werden, um den Träger in den Mehrschichtaufbau mit einzubeziehen. In einer weiteren Ausführungsform können die Metalloxid-, Metallsilkat-, Metalloxidhydrat-, Metallsuboxid-, Metall-, Metallfluorid-, Metallnitrid-, Metalloxynitridschichten mit Farbmitteln oder anderen Elementen versetzt oder dotiert sein. Als Farbmittel oder andere Elemente eignen sich beispielsweise anorganische Farbpigmente wie farbige Metalloxide, z.B. Magnetit, Chrom-(III)-oxid oder Farbpigmente, wie z.B. Thenards Blau (ein Co-Al-Spinell) oder Elemente wie z.B. Yttrium oder Antimon, sowie generell Pigmente aus der Struktur-Klasse der Perowskite, Pyrochlore, Rutile und Spinelle. Perlglanzpigmente enthaltend diese Schichten zeigen eine hohe Farbenvielfalt in bezug auf ihre Körperfarbe und können in vielen Fällen eine winkelabhängige Änderung der Farbe (Farbflop) durch Interferenz zeigen.

Die äußere Schicht auf dem Träger ist in einer bevorzugten Ausführungsform ein hochbrechendes Metalloxid. Diese äußere Schicht kann zusätzlich auf den oben genannten Schichtpaketen oder bei hochbrechenden Trägern Teil eines Schichtpaketes sein und z.B. aus TiO₂, Titansuboxiden, Fe₂O₃, SnO₂, ZnO, ZrO₂, Ce₂O₃, CoO, Co₃O₄, V₂O₅, Cr₂O₃ und/oder Mischungen davon, wie zum Beispiel Ilmenit oder Pseudobrookit, bestehen.

Die Dicke der Metalloxid-, Metalloxidhydrat-, Metallsilkat-, Metallsuboxid-, Metall-, Metallfluorid-, Metallnitrid-, Metalloxynitridschichten oder einer Mischung daraus beträgt üblicherweise 3 bis 300 nm und im Falle der Metalloxid-, Metalloxidhydrat-, Metallsuboxid-, Metallfluorid-, Metallnitrid-, Metalloxynitridschichten oder einer Mischung daraus vorzugsweise 20 bis 200 nm. Die Dicke der Metallschichten beträgt vorzugsweise 4 bis 50 nm.

Die optische Schicht besteht vorzugsweise aus TiO₂, ZrO₂, Fe₂O₃, Fe₃O₄, SnO₂, ZnO, bzw. Gemische oder Kombinationen davon. Die Schicht kann undotiert oder dotiert sein. Geeignete Dotiermittel sind z.B. Erdalkalimetalle bzw. deren Verbindungen, insbesondere Calcium und Magnesium. Der Anteil der Dotierung beträgt in der Regel maximal 5 Gew.% bezogen auf die jeweilige Schicht.

Besonders bevorzugt handelt es sich bei der optischen Schicht um eine TiO₂-Schicht, Fe₂O₃-Schicht, eine TiO₂/Fe₂O₃-Mischschicht, eine Pseudobrookit-Schicht (Fe₂TiO₅) oder um Kombinationen aus diesen Schichten in einem Mehrschichtsystem wie z.B. TiO₂ - SiO₂ - TiO₂ oder Fe₂O₃ - SiO₂ - Fe₂O₃.

Das Titandioxid kann in der hochbrechenden Beschichtung in der Rutil- oder in der Anatasmodifikation vorliegen, vorzugsweise liegt es als Rutil vor. Die Verfahren zur Herstellung von Rutil sind im Stand der Technik beispielsweise beschrieben in der
U.S. 5,433,779, U.S. 4,038,099, U.S. 6,626,989, DE 25 22 572 C2, EP 0 271 767 B1. Vorzugsweise wird vor der TiO₂-Auffällung auf das Substratplättchen eine dünne Zinnoxidschicht (< 10 nm) aufgebracht, die als Additiv dient um das TiO₂ in das Rutil zu überführen.

Die Dicke der optisch aktiven Schicht beträgt vorzugsweise jeweils 30 bis 350 nm, insbesondere 50 bis 250 nm.

Für das erfindungsgemäße Pigment/Fritten-Gemisch besonders bevorzugte Perlglanzpigmente basierend auf plättchenförmigen Substraten werden nachfolgend genannt:
Substratplättchen + TiO₂
Substratplättchen + Fe₂O₃
Substratplättchen + Fe₃O₄
Substratplättchen + TiO₂/Fe₂O₃
Substratplättchen + FeTiO₃
Substratplättchen + Fe₂TiO₅
Substratplättchen + ZrO₂
Substratplättchen + ZnO
Substratplättchen + SnO₂
Substratplättchen + Cr₂O₃
Substratplättchen + Ce₂O₃
Substratplättchen + TiOₓ (reduziert), wobei x = 1,50 - 1,95
Substratplättchen + TiO₂ + Fe₂O₃
Substratplättchen + TiO₂ + Fe₃O₄
Substratplättchen + Fe₂O₃ + TiO₂
Substratplättchen + TiO₂ + SiO₂ + TiO₂
Substratplättchen + TiO₂ + SnO₂ + TiO₂
Substratplättchen + TiO₂ + Al₂O₃ + TiO₂
Substratplättchen + Fe₂O₃ + SiO₂ + TiO₂
Substratplättchen + TiO₂/Fe₂O₃ + SiO₂ + TiO₂
Substratplättchen + TiO₂/Fe₂O₃ + SiO₂ + TiO₂/Fe₂O₃
Substratplättchen + TiO₂/Fe₂O₃ + SiO₂ + TiO₂ + TiO₂/Fe₂O₃
Substratplättchen + TiO₂ + SiO₂ + TiO₂/Fe₂O₃
Substratplättchen + TiO₂ + SiO₂
Substratplättchen + TiO₂ + Al₂O₃
Substratplättchen + TiO₂ + MgO x SiO₂ + TiO₂
Substratplättchen + Fe₂O₃ + MgO x SiO₂ + TiO₂
Substratplättchen + TiO₂/Fe₂O₃ + MgO x SiO₂ + TiO₂
Substratplättchen + TiO₂/Fe₂O₃ + MgO x SiO₂ + TiO₂/Fe₂O₃
Substratplättchen + TiO₂/Fe₂O₃ + MgO x SiO₂ + TiO₂ + TiO₂/Fe₂O₃
Substratplättchen + TiO₂ + MgO x SiO₂ + TiO₂/Fe₂O₃
Substratplättchen + SnO₂ + TiO₂ + SiO₂ + SnO₂ + TiO₂
Substratplättchen + SnO₂ + TiO₂ + SnO₂ + TiO₂
Substratplättchen + SnO₂ + TiO₂ + Fe₂O₃ + SiO₂ + SnO₂ + TiO₂ + Fe₂O₃
Substratplättchen + Fe₂O₃ + SnO₂ + TiO₂
Substratplättchen + Fe₂O₃ + SnO₂ + Fe₂O₃
Substratplättchen + TiO₂ + SnO₂ + TiO₂
Substratplättchen + TiO₂/Fe₂O₃ + SnO₂ + TiO₂
Substratplättchen + TiO₂/Fe₂O₃ + SnO₂ + TiO₂/Fe₂O₃
Substratplättchen + SnO₂ + TiO₂ + Fe₂O₃ + SnO₂ + TiO₂ + Fe₂O₃.
Substratplättchen + Fe₂TiO₅ + SnO₂ + Fe₂TiO₅
Substratplättchen + Fe₂TiO₅ + SiO₂ + Fe₂TiO₅

In einer weiteren bevorzugten Ausführungsform wird zunächst auf das Substratplätchen eine erste niedrigbrechende Schicht aufgebracht. Unter niedrigbrechender Schicht wird in dieser Anmeldung eine Schicht verstanden, die eine Brechzahl von < 1,8 aufweist.

Vorzugsweise ist die niedrigbrechende Schicht auf dem Substrat ausgewählt aus der Gruppe Al₂O₃, SiO₂, Zirkonsilikat ZrSiO₄, Mullit 3Al₂O₃ x 2SiO₂ bzw. 2Al₂O₃ x SiO₂ (Sinter- bzw. Schmelzmullit) oder Erdalkali-Silikat (MSiO₃ ; mit M = Mg²⁺, Ca²⁺, Sr²⁺, Ba²⁺ oder M₂Si₃O₈; mit M = Mg²⁺, Ca²⁺, Sr²⁺, Ba²⁺).

Bevorzugte Pigmente mit einer niedrigbrechenden Schicht (NBS) auf der Substratoberfläche zeichnen sich durch folgenden Aufbau aus:
Substratplättchen + NBS + TiO₂
Substratplättchen + NBS + Fe₂O₃
Substratplättchen + NBS + Fe₃O₄
Substratplättchen + NBS + TiO₂/Fe₂O₃
Substratplättchen + NBS + FeTiO₃
Substratplättchen + NBS + Fe₂TiO₅
Substratplättchen + NBS + ZrO₂
Substratplättchen + NBS + ZnO
Substratplättchen + NBS + SnO₂
Substratplättchen + NBS + Cr₂O₃
Substratplättchen + NBS + Ce₂O₃
Substratplättchen + NBS + TiOₓ (reduziert), wobei x = 1,50 - 1,95
Substratplättchen + NBS + TiO₂ + Fe₂O₃
Substratplättchen + NBS + TiO₂ + Fe₃O₄
Substratplättchen + NBS + Fe₂O₃ + TiO₂
Substratplättchen + NBS + TiO₂ + SiO₂ + TiO₂
Substratplättchen + NBS + TiO₂ + SnO₂ + TiO₂
Substratplättchen + NBS + TiO₂ + Al₂O₃ + TiO₂
Substratplättchen + NBS + Fe₂O₃ + SiO₂ + TiO₂
Substratplättchen + NBS + TiO₂/Fe₂O₃ + SiO₂ + TiO₂
Substratplättchen + NBS + TiO₂/Fe₂O₃ + SiO₂ + TiO₂/Fe₂O₃
Substratplättchen + NBS + TiO₂/Fe₂O₃ + SiO₂ + TiO₂ + TiO₂/Fe₂O₃
Substratplättchen + NBS + TiO₂ + SiO₂ + TiO₂/Fe₂O₃
Substratplättchen + NBS + TiO₂ + SiO₂
Substratplättchen + NBS + TiO₂ + Al₂O₃
Substratplättchen + NBS + TiO₂ + MgO x SiO₂ + TiO₂
Substratplättchen + NBS + Fe₂O₃ + MgO x SiO₂ + TiO₂
Substratplättchen + NBS + TiO₂/Fe₂O₃ + MgO x SiO₂ + TiO₂
Substratplättchen + NBS + TiO₂/Fe₂O₃ + MgO x SiO₂ + TiO₂/Fe₂O₃
Substratplättchen + NBS + TiO₂/Fe₂O₃ + MgO x SiO₂ + TiO₂ + TiO₂/Fe₂O₃
Substratplättchen + NBS + TiO₂ + MgO x SiO₂ + TiO₂/Fe₂O₃
Substratplättchen + NBS + SnO₂ + TiO₂ + SiO₂ + SnO₂ + TiO₂
Substratplättchen + NBS + SnO₂ + TiO₂ + SnO₂ + TiO₂
Substratplättchen + NBS + SnO₂ + TiO₂ + Fe₂O₃ + SiO₂ + SnO₂ + TiO₂ + Fe₂O₃
Substratplättchen + NBS + Fe₂O₃ + SnO₂ + TiO₂
Substratplättchen + NBS + Fe₂O₃ + SnO₂ + Fe₂O₃
Substratplättchen + NBS + TiO₂ + SnO₂ + TiO₂
Substratplättchen + NBS + TiO₂/Fe₂O₃ + SnO₂ + TiO₂
Substratplättchen + NBS + TiO₂/Fe₂O₃ + SnO₂ + TiO₂/Fe₂O₃
Substratplättchen + NBS + SnO₂ + TiO₂ + Fe₂O₃ + SnO₂ + TiO₂ + Fe₂O₃
Substratplättchen + NBS + Fe₂TiO₅ + SnO₂ + Fe₂TiO₅
Substratplättchen + NBS + Fe₂TiO₅ + SiO₂ + Fe₂TiO₅

In dem erfindungsgemäßen Perlglanzpigment/Fritten-Gemisch können auch unterschiedliche Perlglanzpigmente als Mischung verwendet werden. Vorzugsweise wird nur eine Sorte Perlglanzpigment eingesetzt.

Unter Schicht oder Beschichtung wird in dieser Anmeldung die vollständige Belegung des plättchenförmigen Substrats verstanden.

Die Perlglanzpigmente lassen sich relativ leicht herstellen. Die Belegung der Substratplättchen erfolgt vorzugsweise nasschemisch, wobei die zur Herstellung von Perlglanzpigmenten entwickelten nasschemischen Beschichtungsverfahren angewendet werden können. Derartige Verfahren sind z. B. beschrieben in DE 14 67 468, DE 19 59 988, DE 20 09 566, DE 22 14 545, DE 22 15 191, DE 22 44 298, DE 23 13 331, DE 25 22 572, DE 31 37 808, DE 31 37 809, DE 31 51 343, DE 31 51 354, DE 31 51 355, DE 32 11 602, DE 32 35 017 oder auch in weiteren dem Fachmann bekannten Patentdokumenten und sonstigen Publikationen.

Weiterhin kann die Beschichtung der Substrate auch in einem Wirbelbettreaktor durch Gasphasenbeschichtung erfolgen, wobei z. B. die in EP 0 045 851 A1 und EP 0 106 235 A1 zur Herstellung von Perlglanzpigmenten vorgeschlagenen Verfahren entsprechend angewandt werden können.

Bei der Nassbeschichtung werden die Substratpartikel in Wasser suspendiert und mit einem oder mehreren löslichen Metallsalzen bei einem für die Hydrolyse geeigneten pH-Wert versetzt, der so gewählt wird, dass die Metalloxide bzw. Metalloxidhydrate direkt auf den Plättchen ausgefällt werden, ohne dass es zu Nebenfällungen kommt. Der pH-Wert wird üblicherweise durch gleichzeitiges Zudosieren einer Base oder Säure konstant gehalten. Anschließend werden die Pigmente abgetrennt, gewaschen und getrocknet und gegebenenfalls geglüht, wobei die Glühtemperatur in Hinblick auf die jeweils vorliegende Beschichtung optimiert werden kann. In der Regel liegen die Glühtemperaturen zwischen 250 und 1000 °C, vorzugsweise zwischen 350 und 900 °C. Falls gewünscht können die Pigmente nach Aufbringen einzelner Beschichtungen abgetrennt, getrocknet und ggf. geglüht werden, um dann zur Auffällung der weiteren Schichten wieder resuspendiert zu werden.

Sofern beispielsweise eine TiO₂- oder eine TiO₂/Fe₂O₃-Schicht reduziert werden soll, findet die Reduktion des fertigen Perlglanzpigments vorzugsweise nach der Trocknung statt, indem das Pigment nachfolgend bei 500 bis 1200 °C, vorzugsweise bei 500 - 1000 °C, insbesondere bei 500 - 800 °C, für 0,5 -5 h , vorzugsweise für 0,5 - 2 h unter reduzierten Bedingungen, vorzugsweise unter Formiergas (N₂/H₂), geglüht wird. Beim Einsatz von reduzierend geglühten Pigmenten in der Glasur hat es sich aber als hilfreich erwiesen bei den Brennbedingungen für das zu glasierende Werkstücks ebenfalls reduzierende Bedingungen zu wählen.

Zur Verbesserung der Benetzbarkeit und/oder Verträglichkeit mit dem Druckmedium empfiehlt es sich häufig, in Abhängigkeit vom Einsatzgebiet, das fertige Perlglanzpigment einer anorganischen oder organischen Nachbeschichtung oder Nachbehandlung zu unterziehen. Als Nachbeschichtungen bzw. Nachbehandlungen kommen beispielsweise die in den DE-PS 22 15 191, DE-OS 31 51 354, DE-OS 32 35 017 oder DE-OS 33 34 598 beschriebenen Verfahren in Frage. Durch diese Nachbeschichtung wird die Handhabung des Pigments, insbesondere die Einarbeitung in unterschiedliche Medien, erleichtert. Zur Verbesserung der Benetzbarkeit, Dispergierbarkeit und/oder Verträglichkeit mit den Anwendungsmedien können funktionelle Beschichtungen aus organischen, bzw. organisch/anorganisch kombinierten Nachbeschichtungen möglich, z.B. mit Silanen, wie beispielsweise beschrieben in der DE 10348174, EP 0090259, EP 0 342 533, EP 0 632 109, EP 0 888 410, EP 0 634 459, EP 1 203795, WO 94/01498, WO 96/32446, WO 99/57204, WO 2004/092284, U.S. 5,759,255, U.S. 5,571,851, WO 01/92425 oder in J.J. Ponjee, Philips Technical Review, Vol. 44, No. 3, 81 ff. und P.H. Harding J.C. Berg, J. Adhesion Sci. Technol. Vol. 11 No. 4, S. 471-493. Die Nachbeschichtung umfasst lediglich einen Gewichtsanteil von 0,1 bis 5 Gew. %, vorzugsweise 0,5 bis 3 Gew. %, bezogen auf das Perlglanzpigment.

In einer besonderen Ausführungsform der Erfindung sind die Perlglanzpigmente hydrophob bzw. ambiphil nachbeschichtet, was bei der Applikation über Druckpasten den Vorteil der homogeneren Verteilung im Druckmedium und damit einer homogeneren Farbverteilung auf dem Werkstück zur Folge hat.

Das erfindungsgemäße Perlglanzpigment/Fritte-Gemisch erweitert das Farbspektrum von pigmentierten Keramikglasuren auf gebrannten oder ungebrannten Ziegeln, Boden- und Wandfliesen für Innen- oder Außenanwendung, Sanitärkeramik wie Wannen, Waschbecken und Toilettenschüsseln, Essgeschirr aus Porzellan, Ton- und Keramikwaren um attraktive Interferenzfarben (Silber, Gold, Bronze, Kupfer, Rot, Violett, Blau, Türkis, Grün), sowie mit sogenannten Körperfarben-Perlglanzpigmenten, welche sich durch eine Kombinationen aus Interferenz- und Absorptionsfarbe insbesondere im Bereich der Gold-, Messing-, Bronze-, Kupfer-, Rot- und Grün-Farbtöne auszeichnen. Ferner ermöglicht es auch völlig neuartige Farbeffekte wie Betrachtungswinkel-abhängige sogenannte Farbflop-Effekte. Weiterhin ist es möglich durch die Wahl des Perlglanzpgigments neue optische Effekte wie Sparkle- / Glitzer-Effekte und grobe bzw. feine Texturen zu ermöglichen.

Gegenstand der Erfindung ist auch die Verwendung des erfindungsgemäßen Perlglanzpigment/Fritte-Gemisches für Keramikglasuren auf gebrannten oder ungebrannten Ziegeln, Boden- und Wandfliesen für Innen- oder Außenanwendung, Sanitärkeramik, Porzellan, Ton- und Keramikwaren.

Gegenstand der Erfindung sind somit auch Formulierungen enthaltend das erfindungsgemäße Perlglanzpigment/Fritte-Gemisch.

Die nachfolgenden Beispiele sollen die Erfindung erläutern, ohne sie jedoch zu begrenzen.

### Beispiele

Das Herstellen und Charakterisieren eines erfindungsgemäßen Pigment/Fritten-Gemisches unterteilt sich in vier Schritte:
1) Herstellen der Druckpaste:

Zur Herstellung von feinen Farbrastern und reliefartigen Drucken auf keramischen Unterlagen mittels keramischer Farben werden Siebdrucköle eingesetzt, die ein Verlaufen der Farbpasten nach dem Druck verhindern und konturenscharfe Drucke ergeben. Dazu verwendet man Zusätze zu den bekannten Bindemitteln, die aus feinverteilten natürlichen oder künstlichen Wachsen und/oder aus feinverteilten, beim Brennen in das silikatische Gerüst des Flußmittels einbaufähigen, anorganischen silikatischen oder oxidischen Stoffen bestehen. Das Perlglanzpigment mit der entsprechenden Menge Fritte und dem Druckmedium (in den Beispielen sind Siebdrucköl 221-ME und Screenprint Bulk 803035 MR - beides handelsübliche Produkte von Ferro - eingesetzt worden) werden für eine Reihe von Versuchen (siehe Tabelle 1) eingewogen und homogenisiert.

Das Effektpigment gemäß der Beispiele 1 bis 275 wird mit der entsprechenden Menge an Fritte der nachfolgenden Zusammensetzung

| Fritte | CaO | Na₂O | K₂O | BaO | Al₂O₃ | SiO₂ | B₂O₃ |
|---|---|---|---|---|---|---|---|
| Gew.% | 9,7 | 5,2 | 1,1 | 1,3 | 10,1 | 69,6 | 3,0 |

eingewogen und homogenisiert.

Die Einwaage der entsprechenden Rohstoffe, d.h. Perlglanzpigment, Fritte und Drucköl zur Pastenherstellung ist der nachfolgenden Tabelle zu entnehmen:

**Tabelle 1:**

| **Beispiel Nr.** | **Perlglanzpigment** | | **Fritte** | **Drucköl** | **Anpast-Verhältnis** | **W_{Pigm} im Feststoff** | **W_{Pigm} in der Paste** |
|---|---|---|---|---|---|---|---|
| 1 | 1,5 g | Xirallic© Crystal Silver (Merck KGaA) | 3,5 g | 7,0 g | 10 : 14 | 30,00 | 12,50 |
| 2 | 1,0 g | Xirallic© Crystal Silver (Merck KGaA) | 3,5 g | 7,0 g | 10 : 15,6 | 22,22 | 8,70 |
| 3 | 0,8 g | Xirallic© Crystal Silver (Merck KGaA) | 3,5 g | 7,0 g | 10 : 16,3 | 18,60 | 7,08 |
| 4 | 0,6 g | Xirallic© Crystal Silver (Merck KGaA) | 3,5 g | 7,0 g | 10 : 17,1 | 14,63 | 5,41 |
| 5 | 1,5 g | Xirallic© Crystal Silver (Merck KGaA) | 3,5 g | 9,0 g | 10 : 18 | 30,00 | 10,71 |
| 6 | 1,0 g | Xirallic© Crystal Silver (Merck KGaA) | 3,5 g | 9,0 g | 10 : 20 | 22,22 | 7,41 |
| 7 | 0,8 g | Xirallic© Crystal Silver (Merck KGaA) | 3,5 g | 9,0 g | 10 : 20,9 | 18,60 | 6,02 |
| 8 | 0,6 g | Xirallic© Crystal Silver (Merck KGaA) | 3,5 g | 9,0 g | 10 : 22 | 14,63 | 4,58 |
| 9 | 1,5 g | Xirallic© Crystal Silver (Merck KGaA) | 2,0 g | 7,0 g | 10 : 20 | 42,86 | 14,29 |
| 10 | 1,5 g | Xirallic© Crystal Silver (Merck KGaA) | 1,5 g | 7,0 g | 10 : 23,3 | 50,00 | 15,00 |
| 11 | 1,5 g | Xirallic© Crystal Silver (Merck KGaA) | 1,0 g | 7,0 g | 10 : 28 | 60,00 | 15,79 |
| 12 | 1,5 g | Xirallic© Crystal Silver (Merck KGaA) | 0,5 g | 7,0 g | 10 : 35 | 75,00 | 16,67 |
| 13 | 5,0 g | Xirallic© Crystal Silver (Merck KGaA) | 0,0 g | 7,0 g | 10 : 14 | 100,0 0 | 41,67 |
| 14 | 2,0 g | Xirallic© Crystal Silver (Merck KGaA) | 3,0 g | 7,0 g | 10 : 14 | 40,00 | 16,67 |
| 15 | 3,8 g | Xirallic© Crystal Silver (Merck KGaA) | 1,2 g | 7,0 g | 10 : 14 | 76,00 | 31,67 |
| 16 | 4,3 g | Xirallic© Crystal Silver (Merck KGaA) | 0,7 g | 7,0 g | 10 : 14 | 86,00 | 35,83 |
| 17 | 4,5 g | Xirallic© Crystal Silver (Merck KGaA) | 0,5 g | 7,0 g | 10 : 14 | 90,00 | 37,50 |
| 18 | 4,8 g | Xirallic© Crystal Silver (Merck KGaA) | 0,2 g | 7,0 g | 10 : 14 | 96,00 | 40,00 |
| 19 | 4,9 g | Xirallic© Crystal Silver (Merck KGaA) | 0,1 g | 7,0 g | 10 : 14 | 98,00 | 40,83 |
| 20 | 1,5 g | Iriodin© 103 (Merck KGaA) | 3,5 g | 7,0 g | 10 : 14 | 30,00 | 12,50 |
| 21 | 1,0 g | Iriodin© 103 (Merck KGaA) | 3,5 g | 7,0 g | 10 : 15,6 | 22,22 | 8,70 |
| 22 | 0,8 g | Iriodin© 103 (Merck KGaA) | 3,5 g | 7,0 g | 10 : 16,3 | 18,60 | 7,08 |
| 23 | 0,6 g | Iriodin© 103 (Merck KGaA) | 3,5 g | 7,0 g | 10 : 17,1 | 14,63 | 5,41 |
| 24 | 1,5 g | Iriodin© 103 (Merck KGaA) | 3,5 g | 9,0 g | 10 : 18 | 30,00 | 10,71 |
| 25 | 1,0 g | Iriodin© 103 (Merck KGaA) | 3,5 g | 9,0 g | 10 : 20 | 22,22 | 7,41 |
| 26 | 0,8 g | Iriodin© 103 (Merck KGaA) | 3,5 g | 9,0 g | 10 : 20,9 | 18,60 | 6,02 |
| 27 | 0,6 g | Iriodin© 103 (Merck KGaA) | 3,5 g | 9,0 g | 10 : 22 | 14,63 | 4,58 |
| 28 | 1,5 g | Iriodin© 103 (Merck KGaA) | 2,0 g | 7,0 g | 10 : 20 | 42,86 | 14,29 |
| 29 | 1,5 g | Iriodin© 103 (Merck KGaA) | 1,5 g | 7,0 g | 10 : 23,3 | 50,00 | 15,00 |
| 30 | 1,5 g | Iriodin© 103 (Merck KGaA) | 1,0 g | 7,0 g | 10 : 28 | 60,00 | 15,79 |
| 31 | 1,5 g | Iriodin© 103 (Merck KGaA) | 0,5 g | 7,0 g | 10 : 35 | 75,00 | 16,67 |
| 32 | 5,0 g | Iriodin© 103 (Merck KGaA) | 0,0 g | 7,0 g | 10 : 14 | 100,0 | 41,67 |
| 33 | 2,0 g | Iriodin© 103 (Merck KGaA) | 3,0 g | 7,0 g | 10 : 14 | 40,00 | 16,67 |
| 34 | 3,8 g | Iriodin© 103 (Merck KGaA) | 1,2 g | 7,0 g | 10 : 14 | 76,00 | 31,67 |
| 35 | 4,3 g | Iriodin© 103 (Merck KGaA) | 0,7 g | 7,0 g | 10 : 14 | 86,00 | 35,83 |
| 36 | 4,5 g | Iriodin© 103 (Merck KGaA) | 0,5 g | 7,0 g | 10 : 14 | 90,00 | 37,50 |
| 37 | 4,8 g | Iriodin© 103 (Merck KGaA) | 0,2 g | 7,0 g | 10 : 14 | 96,00 | 40,00 |
| 38 | 4,9 g | Iriodin© 103 KGaA) | 0,1 g | 7,0 g | 10 : 14 | 98,00 | 40,83 |
| 39 | 1,5 g | Iriodin© 305 (Merck KGaA) | 3,5 g | 7,0 g | 10:14 | 30,00 | 12,50 |
| 40 | 1,0 g | Iriodin© 305 (Merck KGaA) | 3,5 g | 7,0 g | 10:15,6 | 22,22 | 8,70 |
| 41 | 0,8g | Iriodin© 305 (Merck KGaA) | 3,5 g | 7,0 g | 10:16,3 | 18,60 | 7,08 |
| 42 | 0,6 g | Iriodin© 305 (Merck KGaA) | 3,5 g | 7,0 g | 10:17,1 | 14,63 | 5,41 |
| 43 | 1,5 g | Iriodin© 305 (Merck KGAA) | 3,5 g | 9,0 g | 10:18 | 30,00 | 10,71 |
| 44 | 1,0 g | Iriodin© 305 (Merck KGaA) | 3,5 g | 9,0 g | 10:20 | 22,22 | 7,41 |
| 45 | 0,8 g | Iriodin© 305 (Merck KGaA) | 3,5 g | 9,0 g | 10:20,9 | 18,60 | 6,02 |
| 46 | 0,6 g | Iriodin© 305 (Merck KGaA) | 3,5 g | 9,0 g | 10:22 | 14,63 | 4,58 |
| 47 | 1,5 g | Iriodin© 305 (Merck KGaA) | 2,0 g | 7,0 g | 10:20 | 42,86 | 14,29 |
| 48 | 1,5 g | Iriodin© 305 (Merck KGaA) | 1,5 g | 7,0 g | 10:23,3 | 50,00 | 15,00 |
| 49 | 1,5 g | Iriodin© 305 (Merck KGaA) | 1,0 g | 7,0 g | 10:28 | 60,00 | 15,79 |
| 50 | 1,5 g | Iriodin© 305 (Merck KGaA) | 0,5 g | 7,0 g | 10:35 | 75,00 | 16,67 |
| 51 | 5,0 g | Iriodin© 305 (Merck KGaA) | 0,0 g | 7,0 g | 10:14 | 100,0 | 41,67 |
| 52 | 2,0 g | Iriodin© 305 (Merck KGaA) | 3,0 g | 7,0 g | 10:14 | 40,00 | 16,67 |
| 53 | 3,8 g | Iriodin© 305 (Merck KGaA) | 1,2 g | 7,0 g | 10:14 | 76,00 | 31,67 |
| 54 | 4,3 g | Iriodin© 305 (Merck KGaA) | 0,7 g | 7,0 g | 10:14 | 86,00 | 35,83 |
| 55 | 4,5 g | Iriodin© 305 (Merck KGaA) | 0,5 g | 7,0 g | 10:14 | 90,00 | 37,50 |
| 56 | 4,8 g | Iriodin© 305 (Merck KGaA) | 0,2 g | 7,0 g | 10:14 | 96,00 | 40,00 |
| 57 | 4,9 g | Iriodin© 305 (Merck KGaA) | 0,1 g | 7,0 g | 10:14 | 98,00 | 40,83 |
| 58 | 1,5 g | Iriodin© 4504 Lava Red (Merck KGaA) | 3,5 g | 7,0 g | 10:14 | 30,00 | 12,50 |
| 59 | 1,0 g | Iriodin© 4504 Lava Red (Merck KGaA) | 3,5 g | 7,0 g | 10:15,6 | 22,22 | 8,70 |
| 60 | 0,8 g | Iriodin© 4504 Lava Red (Merck KGaA) | 3,5 g | 7,0 g | 10:16,3 | 18,60 | 7,08 |
| 61 | 0,6 g | Iriodin© 4504 Lava Red (Merck KGaA) | 3,5 g | 7,0 g | 10:17,1 | 14,63 | 5,41 |
| 62 | 1,5 g | Iriodin© 4504 Lava Red (Merck KGaA) | 3,5 g | 9,0 g | 10:18 | 30,00 | 10,71 |
| 63 | 1,0 g | Iriodin© 4504 Lava Red (Merck KGaA) | 3,5 g | 9,0 g | 10:20 | 22,22 | 7,41 |
| 64 | 0,8 g | Iriodin© 4504 Lava Red (Merck KGaA) | 3,5 g | 9,0 g | 10:20,9 | 18,60 | 6,02 |
| 65 | 0,6 g | Iriodin© 4504 Lava Red (Merck KGaA) | 3,5 g | 9,0 g | 10:22 | 14,63 | 4,58 |
| 66 | 1,5 g | Iriodin© 4504 Lava Red (Merck KGaA) | 2,0 g | 7,0 g | 10:20 | 42,86 | 14,29 |
| 67 | 1,5 g | Iriodin© 4504 Lava Red (Merck KGaA) | 1,5 g | 7,0 g | 10:23,3 | 50,00 | 15,00 |
| 68 | 1,5 g | Iriodin© 4504 Lava Red (Merck KGaA) | 1,0 g | 7,0 g | 10:28 | 60,00 | 15,79 |
| 69 | 1,5 g | Iriodin© 4504 Lava Red (Merck KGaA) | 0,5 g | 7,0 g | 10:35 | 75,00 | 16,67 |
| 70 | 5,0 g | Iriodin© 4504 Lava Red (Merck KGaA) | 0,0 g | 7,0 g | 10:14 | 100,0 0 | 41,67 |
| 71 | 2,0 g | Iriodin© 4504 Lava Red (Merck KGaA) | 3,0 g | 7,0 g | 10:14 | 40,00 | 16,67 |
| 72 | 3,8 g | Iriodin© 4504 Lava Red (Merck KGaA) | 1,2 g | 7,0 g | 10:14 | 76,00 | 31,67 |
| 73 | 4,3 g | Iriodin© 4504 Lava Red (Merck KGaA) | 0,7 g | 7,0 g | 10:14 | 86,00 | 35,83 |
| 74 | 4,5 g | Iriodin© 4504 Lava Red (Merck KGaA) | 0,5 g | 7,0 g | 10:14 | 90,00 | 37,50 |
| 75 | 4,5 g | Iriodin© 4504 Lava Red (Merck KGaA) | 0,2 g | 7,0 g | 10:14 | 96,00 | 40,00 |
| 76 | 4,8 g | Iriodin© 4504 Lava Red (Merck KGaA) | 0,1 g | 7,0 g | 10:14 | 98,00 | 40,83 |
| 77 | 1,5 g | Iriodin© 9219 (Merck KGaA) | 3,5 g | 7,0 g | 10:14 | 30,00 | 12,50 |
| 78 | 1,0 g | Iriodin© 9219 (Merck KGaA) | 3,5 g | 7,0 g | 10:15,6 | 22,22 | 8,70 |
| 79 | 0,8 g | Iriodin© 9219 (Merck KGaA) | 3,5 g | 7,0 g | 10:16,3 | 18,60 | 7,08 |
| 80 | 0,6 g | Iriodin© 9219 (Merck KGaA) | 3,5 g | 7,0 g | 10:17,1 | 14,63 | 5,41 |
| 81 | 1,5 g | Iriodin© 9219 (Merck KGaA) | 3,5 g | 9,0 g | 10:18 | 30,00 | 10,71 |
| 82 | 1,0 g | Iriodin© 9219 (Merck KGaA) | 3,5 g | 9,0 g | 10:20 | 22,22 | 7,41 |
| 83 | 0,8 g | Iriodin© 9219 (Merck KGaA) | 3,5 g | 9,0 g | 10:20,9 | 18,60 | 6,02 |
| 84 | 0,6 g | Iriodin© 9219 (Merck KGaA) | 3,5 g | 9,0 g | 10:22 | 14,63 | 4,58 |
| 85 | 1,5 g | Iriodin© 9219 (Merck KGaA) | 2,0 g | 7,0 g | 10:20 | 42,86 | 14,29 |
| 86 | 1,5 g | Iriodin© 9219 (Merck KGaA) | 1,5 g | 7,0 g | 10:23,3 | 50,00 | 15,00 |
| 87 | 1,5 g | Iriodin© 9219 (Merck KGaA) | 1,0 g | 7,0 g | 10:28 | 60,00 | 15,79 |
| 88 | 1,5 g | Iriodin© 9219 (Merck KGaA) | 0,5 g | 7,0 g | 10:35 | 75,00 | 16,67 |
| 89 | 5,0 g | Iriodin© 9219 (Merck KGaA) | 0,0 g | 7,0 g | 10:14 | 100,0 | 41,67 |
| 90 | 2,0 g | Iriodin© 9219 (Merck KGaA) | 3,0 g | 7,0 g | 10:14 | 40,00 | 16,67 |
| 91 | 3,8 g | Iriodin© 9219 (Merck KGaA) | 1,2 g | 7,0 g | 10:14 | 76,00 | 31,67 |
| 92 | 4,3 g | Iriodin© 9219 (Merck KGaA) | 0,7 g | 7,0 g | 10:14 | 86,00 | 35,83 |
| 93 | 4,5 g | Iriodin© 9219 (Merck KGaA) | 0,5 g | 7,0 g | 10:14 | 90,00 | 37,50 |
| 94 | 4,8 g | Iriodin© 9219 (Merck KGaA) | 0,2 g | 7,0 g | 10:14 | 96,00 | 40,00 |
| 95 | 4,9 g | Iriodin© 9219 (Merck KGaA) | 0,1 g | 7,0 g | 10:14 | 98,00 | 40,83 |
| 96 | 1,5 g | Iriodin© 9444 (Merck KGaA) | 3,5 g | 7,0 g | 10:14 | 30,00 | 12,50 |
| 97 | 1,0 g | Iriodin© 9444 (Merck KGaA) | 3,5 g | 7,0 g | 10:15,6 | 22,22 | 8,70 |
| 98 | 0,8 g | Iriodin© 9444 (Merck KGaA) | 3,5 g | 7,0 g | 10:16,3 | 18,60 | 7,08 |
| 99 | 0,6 g | Iriodin© 9444 (Merck KGaA) | 3,5 g | 7,0 g | 10:17,1 | 14,63 | 5,41 |
| 100 | 1,5 g | Iriodin© 9444 (Merck KGaA) | 3,5 g | 9,0 g | 10:18 | 30,00 | 10,71 |
| 101 | 1,0 g | Iriodin© 9444 (Merck KGaA) | 3,5 g | 9,0 g | 10:20 | 22,22 | 7,41 |
| 102 | 0,8 g | Iriodin© 9444 (Merck KGaA) | 3,5 g | 9,0 g | 10:20,9 | 18,60 | 6,02 |
| 103 | 0,6g | Iriodin© 9444 (Merck KGaA) | 3,5 g | 9,0 g | 10:22 | 14,63 | 4,58 |
| 104 | 1,5 g | Iriodin© 9444 (Merck KGaA) | 2,0 g | 7,0 g | 10:20 | 42,86 | 14,29 |
| 105 | 1,5 g | Iriodin© 9444 (Merck KGaA) | 1,5 g | 7,0 g | 10:23,3 | 50,00 | 15,00 |
| 106 | 1,5 g | Iriodin© 9444 (Merck KGaA) | 1,0 g | 7,0 g | 10:28 | 60,00 | 15,79 |
| 107 | 1,5 g | Iriodin© 9444 (Merck KGaA) | 0,5 g | 7,0 g | 10:35 | 75,00 | 16,67 |
| 108 | 5,0 g | Iriodin© 9444 (Merck KGaA) | 0,0 g | 7,0 g | 10:14 | 100,0 | 41,67 |
| 109 | 2,0 g | Iriodin© 9444 (Merck KGaA) | 3,0 g | 7,0 g | 10:14 | 40,00 | 16,67 |
| 110 | 3,8 g | Iriodin© 9444 (Merck KGaA) | 1,2 g | 7,0 g | 10:14 | 76,00 | 31,67 |
| 111 | 4,3 g | Iriodin© 9444 (Merck KGaA) | 0,7 g | 7,0 g | 10:14 | 86,00 | 35,83 |
| 112 | 4,5 g | Iriodin© 9444 (Merck KGaA) | 0,5 g | 7,0 g | 10:14 | 90,00 | 37,50 |
| 113 | 4,8 g | Iriodin© 9444 (Merck KGaA) | 0,2 g | 7,0 g | 10:14 | 96,00 | 40,00 |
| 114 | 4,9 g | Iriodin© 9444 (Merck KGaA) | 0,1 g | 7,0 g | 10:14 | 98,00 | 40,83 |
| 115 | 1,5 g | Iriodin© 9504 (Merck KGaA) | 3,5 g | 7,0 g | 10:14 | 30,00 | 12,50 |
| 116 | 1,0 g | Iriodin© 9504 (Merck KGaA) | 3,5 g | 7,0 g | 10:15,6 | 22,22 | 8,70 |
| 117 | 0,8 g | Iriodin© 9504 (Merck KGaA) | 3,5 g | 7,0 g | 10:16,3 | 18,60 | 7,08 |
| 118 | 0,6 g | Iriodin© 9504 (Merck KGaA) | 3,5 g | 7,0 g | 10:17,1 | 14,63 | 5,41 |
| 119 | 1,5 g | Iriodin© 9504 (Merck KGaA) | 3,5 g | 9,0 g | 10:18 | 30,00 | 10,71 |
| 120 | 1,0 g | Iriodin© 9504 (Merck KGaA) | 3,5 g | 9,0 g | 10:20 | 22,22 | 7,41 |
| 121 | 0,8 g | Iriodin© 9504 (Merck KGaA) | 3,5 g | 9,0 g | 10:20,9 | 18,60 | 6,02 |
| 122 | 0,6 g | Iriodin© 9504 (Merck KGaA) | 3,5 g | 9,0 g | 10:22 | 14,63 | 4,58 |
| 123 | 1,5 g | Iriodin© 9504 (Merck KGaA) | 2,0 g | 7,0 g | 10:20 | 42,86 | 14,29 |
| 124 | 1,5 g | Iriodin© 9504 (Merck KGaA) | 1,5 g | 7,0 g | 10:23,3 | 50,00 | 15,00 |
| 125 | 1,5 g | Iriodin© 9504 (Merck KGaA) | 1,0 g | 7,0 g | 10:28 | 60,00 | 15,79 |
| 126 | 1,5 g | Iriodin© 9504 (Merck KGaA) | 0,5 g | 7,0 g | 10:35 | 75,00 | 16,67 |
| 127 | 5,0 g | Iriodin© 9504 (Merck KGaA) | 0,0 g | 7,0 g | 10:14 | 100,0 | 41,67 |
| 128 | 2,0 g | Iriodin© 9504 (Merck KGaA) | 3,0 g | 7,0 g | 10:14 | 40,00 | 16,67 |
| 129 | 3,8 g | Iriodin© 9504 (Merck KGaA) | 1,2 g | 7,0 g | 10:14 | 76,00 | 31,67 |
| 130 | 4,3 g | Iriodin© 9504 (Merck KGaA) | 0,7 g | 7,0 g | 10:14 | 86,00 | 35,83 |
| 131 | 4,5 g | Iriodin© 9504 (Merck KGaA) | 0,5 g | 7,0 g | 10:14 | 90,00 | 37,50 |
| 132 | 4,8 g | Iriodin© 9504 (Merck KGaA) | 0,2 g | 7,0 g | 10:14 | 96,00 | 40,00 |
| 133 | 4,9 g | Iriodin© 9504 (Merck KGaA) | 0,1 g | 7,0 g | 10:14 | 98,00 | 40,83 |
| 134 | 1,5 g | Xirallic© F60-50 (Merck KGaA) | 3,5 g | 7,0 g | 10:14 | 30,00 | 12,50 |
| 135 | 1,0 g | Xirallic© F60-50 (Merck KGaA) | 3,5 g | 7,0 g | 10:15,6 | 22,22 | 8,70 |
| 136 | 0,8 g | Xirallic© F60-50 (Merck KGaA) | 3,5 g | 7,0 g | 10:16,3 | 18,60 | 7,08 |
| 137 | 0,6 g | Xirallic© F60-50 (Merck KGaA) | 3,5 g | 7,0 g | 10:17,1 | 14,63 | 5,41 |
| 138 | 1,5 g | Xirallic© F60-50 (Merck KGaA) | 3,5 g | 9,0 g | 10:18 | 30,00 | 10,71 |
| 139 | 1,0 g | Xirallic© F60-50 (Merck KGaA) | 3,5 g | 9,0 g | 10:20 | 22,22 | 7,41 |
| 140 | 0,8 g | Xirallic© F60-50 (Merck KGaA) | 3,5 g | 9,0 g | 10:20,9 | 18,60 | 6,02 |
| 141 | 0,6 g | Xirallic© F60-50 (Merck KGaA) | 3,5 g | 9,0 g | 10:22 | 14,63 | 4,58 |
| 142 | 1,5 g | Xirallic© F60-50 (Merck KGaA) | 2,0 g | 7,0 g | 10:20 | 42,86 | 14,29 |
| 143 | 1,5 g | Xirallic© F60-50 (Merck KGaA) | 1,5 g | 7,0 g | 10:23,3 | 50,00 | 15,00 |
| 144 | 1,5 g | Xirallic© F60-50 (Merck KGaA) | 1,0 g | 7,0 g | 10:28 | 60,00 | 15,79 |
| 145 | 1,5 g | Xirallic© F60-50 (Merck KGaA) | 0,5 g | 7,0 g | 10:35 | 75,00 | 16,67 |
| 146 | 5,0 g | Xirallic© F60-50 (Merck KGaA) | 0,0 g | 7,0 g | 10:14 | 100,0 | 41,67 |
| 147 | 2,0 g | Xirallic© F60-50 (Merck KGaA) | 3,0 g | 7,0 g | 10:14 | 40,00 | 16,67 |
| 148 | 3,8 g | Xirallic© F60-50 (Merck KGaA) | 1,2 g | 7,0 g | 10:14 | 76,00 | 31,67 |
| 149 | 4,3 g | Xirallic© F60-50 (Merck KGaA) | 0,7 g | 7,0 g | 10:14 | 86,00 | 35,83 |
| 150 | 4,5 g | Xirallic© F60-50 (Merck KGaA) | 0,5 g | 7,0 g | 10:14 | 90,00 | 37,50 |
| 151 | 4,8 g | Xirallic© F60-50 (Merck KGaA) | 0,2 g | 7,0 g | 10:14 | 96,00 | 40,00 |
| 152 | 4,9 g | Xirallic© F60-50 (Merck KGaA) | 0,1 g | 7,0 g | 10:14 | 98,00 | 40,83 |
| 153 | 1,5 g | Xirallic© F60-51 (Merck KGaA) | 3,5 g | 7,0 g | 10:14 | 30,00 | 12,50 |
| 154 | 1,0 g | Xirallic© F60-51 (Merck KGaA) | 3,5 g | 7,0 g | 10:15,6 | 22,22 | 8,70 |
| 155 | 0,8 g | Xirallic© F60-51 (Merck KGaA) | 3,5 g | 7,0 g | 10:16,3 | 18,60 | 7,08 |
| 156 | 0,6 g | Xirallic© F60-51 (Merck KGaA) | 3,5 g | 7,0 g | 10:17,1 | 14,63 | 5,41 |
| 157 | 1,5 g | Xirallic© F60-51 (Merck KGaA) | 3,5 g | 9,0 g | 10:18 | 30,00 | 10,71 |
| 158 | 1,0 g | Xirallic© F60-51 (Merck KGaA) | 3,5 g | 9,0 g | 10:20 | 22,22 | 7,41 |
| 159 | 0,8 g | Xirallic© F60-51 (Merck KGaA) | 3,5 g | 9,0 g | 10:20,9 | 18,60 | 6,02 |
| 160 | 0,6 g | Xirallic© F60-51 (Merck KGaA) | 3,5 g | 9,0 g | 10:22 | 14,63 | 4,58 |
| 161 | 1,5 g | Xirallic© F60-51 (Merck KGaA) | 2,0 g | 7,0 g | 10:20 | 42,86 | 14,29 |
| 162 | 1,5 g | Xirallic© F60-51 (Merck KGaA) | 1,5 g | 7,0 g | 10:23,3 | 50,00 | 15,00 |
| 163 | 1,5 g | Xirallic© F60-51 (Merck KGaA) | 1,0 g | 7,0 g | 10:28 | 60,00 | 15,79 |
| 164 | 1,5 g | Xirallic© F60-51 (Merck KGaA) | 0,5 g | 7,0 g | 10:35 | 75,00 | 16,67 |
| 165 | 5,0 g | Xirallic© F60-51 (Merck KGaA) | 0,0 g | 7,0 g | 10:14 | 100,0 | 41,67 |
| 166 | 2,0 g | Xirallic© F60-51 (Merck KGaA) | 3,0 g | 7,0 g | 10:14 | 40,00 | 16,67 |
| 167 | 3,8 g | Xirallic© F60-51 (Merck KGaA) | 1,2 g | 7,0 g | 10:14 | 76,00 | 31,67 |
| 168 | 4,3 g | Xirallic© F60-51 (Merck KGaA) | 0,7 g | 7,0 g | 10:14 | 86,00 | 35,83 |
| 169 | 4,5 g | Xirallic© F60-51 (Merck KGaA) | 0,5 g | 7,0 g | 10:14 | 90,00 | 37,50 |
| 170 | 4,8 g | Xirallic© F60-51 (Merck KGaA) | 0,2 g | 7,0 g | 10:14 | 96,00 | 40,00 |
| 171 | 4,9 g | Xirallic© F60-51 (Merck KGaA) | 0,1 g | 7,0 g | 10:14 | 98,00 | 40,83 |
| 172 | 1,5 g | Pyrisma© M40-58 (Merck KGaA) | 3,5 g | 7,0 g | 10:14 | 30,00 | 12,50 |
| 173 | 1,0 g | Pyrisma© M40-58 (Merck KGaA) | 3,5 g | 7,0 g | 10:15,6 | 22,22 | 8,70 |
| 174 | 0,8 g | Pyrisma© M40-58 (Merck KGaA) | 3,5 g | 7,0 g | 10:16,3 | 18,60 | 7,08 |
| 175 | 0,6 g | Pyrisma© M40-58 (Merck KGaA) | 3,5 g | 7,0 g | 10:17,1 | 14,63 | 5,41 |
| 176 | 1,5 g | Pyrisma© M40-58 (Merck KGaA) | 3,5 g | 9,0 g | 10:18 | 30,00 | 10,71 |
| 177 | 1,0 g | Pyrisma© M40-58 (Merck KGaA) | 3,5 g | 9,0 g | 10:20 | 22,22 | 7,41 |
| 178 | 0,8 g | Pyrisma© M40-58 (Merck KGaA) | 3,5 g | 9,0 g | 10:20,9 | 18,60 | 6,02 |
| 179 | 0,6 g | Pyrisma© M40-58 (Merck KGaA) | 3,5 g | 9,0 g | 10:22 | 14,63 | 4,58 |
| 180 | 1,5 g | Pyrisma© M40-58 (Merck KGaA) | 2,0 g | 7,0 g | 10:20 | 42,86 | 14,29 |
| 181 | 1,5 g | Pyrisma© M40-58 (Merck KGaA) | 1,5 g | 7,0 g | 10:23,3 | 50,00 | 15,00 |
| 182 | 1,5 g | Pyrisma© M40-58 (Merck KGaA) | 1,0 g | 7,0 g | 10:28 | 60,00 | 15,79 |
| 183 | 1,5 g | Pyrisma© M40-58 (Merck KGaA) | 0,5 g | 7,0 g | 10:35 | 75,00 | 16,67 |
| 184 | 5,0 g | Pyrisma© M40-58 (Merck KGaA) | 0,0 g | 7,0 g | 10:14 | 100,0 | 41,67 |
| 185 | 2,0 g | Pyrisma© M40-58 (Merck KGaA) | 3,0 g | 7,0 g | 10:14 | 40,00 | 16,67 |
| 186 | 3,8 g | Pyrisma© M40-58 (Merck KGaA) | 1,2 g | 7,0 g | 10:14 | 76,00 | 31,67 |
| 187 | 4,3 g | Pyrisma© M40-58 (Merck KGaA) | 0,7 g | 7,0 g | 10:14 | 86,00 | 35,83 |
| 188 | 4,5 g | Pyrisma© M40-58 (Merck KGaA) | 0,5 g | 7,0 g | 10:14 | 90,00 | 37,50 |
| 189 | 4,8 g | Pyrisma© M40-58 (Merck KGaA) | 0,2 g | 7,0 g | 10:14 | 96,00 | 40,00 |
| 190 | 4,9 g | Pyrisma© M40-58 (Merck KGaA) | 0,1 g | 7,0 g | 10:14 | 98,00 | 40,83 |
| 191 | 4,3 g | SynCrystal© Silver (Eckart GmbH) | 0,7 g | 7,0 g | 10:14 | 86,00 | 35,83 |
| 192 | 4,5 g | SYMIC© B001 Silber(Eckart GmbH) | 0,5 g | 7,0 g | 10:14 | 90,00 | 37,50 |
| 193 | 1,5 g | SYMIC© C001 Silber(Eckart GmbH) | 1,0 g | 7,0 g | 10:28 | 60,00 | 15,79 |
| 194 | 1,5 g | SYMIC© C604 Silber(Eckart GmbH) | 2,0 g | 7,0 g | 10:20 | 42,86 | 14,29 |
| 195 | 1,5 g | SYMIC© OEM X-fine Silver (Eckart GmbH) | 2,0 g | 7,0 g | 10:20 | 42,86 | 14,29 |
| 196 | 1,5 g | SYMIC© C393 Gold (Eckart GmbH) | 2,0 g | 7,0 g | 10:20 | 42,86 | 14,29 |
| 197 | 4,3 g | SYMIC© C522 Erdfarbton Kupfer (Eckart GmbH) | 0,7 g | 7,0 g | 10:14 | 86,00 | 35,83 |
| 198 | 4,3 g | SYMIC© C542 Erdfarbton Feuer-Rot (Eckart GmbH) | 0,7 g | 7,0 g | 10:14 | 86,00 | 35,83 |
| 199 | 4,3 g | SYMIC© OEM Medium Space Gold (Eckart GmbH) | 0,7 g | 7,0 g | 10:14 | 86,00 | 35,83 |
| 200 | 1,5 g | Magnapearl© 1000 (BASF AG) | 2,0 g | 7,0 g | 10:20 | 42,86 | 14,29 |
| 201 | 1,5 g | Magnapearl© 2000 (BASF AG) | 1,0 g | 7,0 g | 10:28 | 60,00 | 15,79 |
| 202 | 3,8 g | Magnapearl© 3100 (BASF AG) | 1,2 g | 7,0 g | 10:14 | 76,00 | 31,67 |
| 203 | 1,5 g | Lumina© Brass 9232D (BASF AG) | 2,0 g | 7,0 g | 10:20 | 42,86 | 14,29 |
| 204 | 1,5 g | Lumina© Copper 9350D (BASF AG) | 1,0 g | 7,0 g | 10:28 | 60,00 | 15,79 |
| 205 | 3,8 g | Lumina© Exterior Gold 2303D (BASF AG) | 1,2 g | 7,0 g | 10:14 | 76,00 | 31,67 |
| 206 | 4,3 g | Lumina© Russet 9450D (BASF | 0,7 g | 7,0 g | 10:14 | 86,00 | 35,83 |
| 207 | 1,5 g | Lumina© Royal Copper (BASF | 2,0 g | 7,0 g | 10:20 | 42,86 | 14,29 |
| 208 | 1,5 g | Lumina© Royal Magenta (BASF AG) | 1,5 g | 7,0 g | 10:23,3 | 50,00 | 15,00 |
| 209 | 1,5 g | Lumina© Royal Blue (BASF AG) | 1,0 g | 7,0 g | 10:28 | 60,00 | 15,79 |
| 210 | 1,5 g | Exterior Polar White KC9119-SW (Fujian Kuncai Fine Chemicals Co.,Ltd.) | 2,0 g | 7,0 g | 10:20 | 42,86 | 14,29 |
| 211 | 1,5 g | Exterior Sterling White KC9103-SW (Fujian Kuncai Fine Chemicals Co.,Ltd.) | 1,0 g | 7,0 g | 10:28 | 60,00 | 15,79 |
| 212 | 1,5 g | Exterior Fine Gold Satin KC9201-SW (Fujian Kuncai Fine Chemicals Co.,Ltd.) | 1,0 g | 7,0 g | 10:28 | 60,00 | 15,79 |
| 213 | 1,5 g | Exterior Platinum Pearl KC9205-SW (Fujian Kuncai Fine Chemicals Co.,Ltd.) | 1,0 g | 7,0 g | 10:28 | 60,00 | 15,79 |
| 214 | 1,5 g | Exterior Gold Pearl KC9300-SW (Fujian Kuncai Fine Chemicals Co.,Ltd. ) | 1,0 g | 7,0 g | 10:28 | 60,00 | 15,79 |
| 215 | 1,5 g | Exterior Royal Gold KC9303-SW (Fujian Kuncai Fine Chemicals Co.,Ltd.) | 1,0 g | 7,0 g | 10:28 | 60,00 | 15,79 |
| 216 | 3,8 g | Exterior Royal Gold Satin KC9323-SW (Fujian Kuncai Fine Chemicals Co.,Ltd.) | 1,2 g | 7,0 g | 10:14 | 76,00 | 31,67 |
| 217 | 3,8 g | Exterior Bright Gold KC9307-SW (Fujian Kuncai Fine Chemicals Co.,Ltd.) | 1,2 g | 7,0 g | 10:14 | 76,00 | 31,67 |
| 218 | 3,8 g | Exterior Bronze KC9502-SW (Fujian Kuncai Fine Chemicals Co.Ltd.) | 1,2 g | 7,0 g | 10:14 | 76,00 | 31,67 |
| 219 | 4,3 g | Exterior Wine Red KC9504-SW (Fujian Kuncai Fine Chemicals Co.,Ltd.) | 0,7 g | 7,0 g | 10:14 | 86,00 | 35,83 |
| 220 | 4,3 g | Exterior Ruby KC9508-SW (Fujian Kuncai Fine Chemicals Co.,Ltd.) | 0,7 g | 7,0 g | 10:14 | 86,00 | 35,83 |
| 221 | 1,5 g | ADAMAS© A-100D (CQV Co.;Ltd) | 2,0 g | 7,0 g | 10:20 | 42,86 | 14,29 |
| 222 | 1,5 g | ADAMAS© A-100D (CQV Co.; Ltd) | 1,5 g | 7,0 g | 10:23,3 | 50,00 | 15,00 |
| 223 | 1,5 g | ADAMAS© A-100D (CQV Co.;Ltd) | 1,0 g | 7,0 g | 10:28 | 60,00 | 15,79 |
| 224 | 3,8 g | ADAMAS© A-100D (CQV Co. ;Ltd) | 1,2 g | 7,0 g | 10:14 | 76,00 | 31,67 |
| 225 | 4,3 g | ADAMAS© A-100D (CQV Co.;Ltd) | 0,7 g | 7,0 g | 10:14 | 86,00 | 35,83 |
| 226 | 4,5 g | ADAMAS© A-100D (CQV Co.;Ltd) | 0,5 g | 7,0 g | 10:14 | 90,00 | 37,50 |
| 227 | 3,8 g | ADAMAS© A-901K Splendor White (CQV Co.;Ltd) | 1,2 g | 7,0 g | 10:14 | 76,00 | 31,67 |
| 228 | 1,5 g | ADAMAS© A-901S Dazzting White (CQV Co.;Ltd) | 2,0 g | 7,0 g | 10:20 | 42,86 | 14,29 |
| 229 | 1,5 g | ADAMAS© A-901S Dazzling White (CQV Co.;Ltd) | 1,0 g | 7,0 g | 10:28 | 60,00 | 15,79 |
| 230 | 4,5 g | ADAMAS© A-901S Dazzling White (CQV Co.;Ltd) | 0,5 g | 7,0 g | 10:14 | 90,00 | 37,50 |
| 231 | 1,5 g | ADAMAS© A-901K Splendor Gold (CQV Co.;Ltd) | 2,0 g | 7,0 g | 10:20 | 42,86 | 14,29 |
| 232 | 1,5 g | ADAMAS© A-901K Splendor Gold (CQV Co.;Ltd) | 1,0 g | 7,0 g | 10:28 | 60,00 | 15,79 |
| 233 | 4,5 g | ADAMAS© A-901K Splendor Gold (CQV Co.;Ltd) | 0,5 g | 7,0 g | 10:14 | 90,00 | 37,50 |
| 234 | 1,5 g | ADAMAS© A-701S Dazzling Gold (CQV Co.;Ltd) | 2,0 g | 7,0 g | 10:20 | 42,86 | 14,29 |
| 235 | 1,5 g | ADAMAS© A-701S Dazzling Gold (CQV Co.;Ltd) | 1,0 g | 7,0 g | 10:28 | 60,00 | 15,79 |
| 236 | 4,5 g | ADAMAS© A-701S Dazzling Gold (CQV Co.;Ltd) | 0,5 g | 7,0 g | 10:14 | 90,00 | 37,50 |
| 237 | 1,5 g | ADAMAS© A-741S Dazzling Red (CQV Co.;Ltd) | 1,0 g | 7,0 g | 10:28 | 60,00 | 15,79 |
| 238 | 1,5 g | ADAMAS© A-781K Splendor Blue (CQV Co.;Ltd) | 1,0 g | 7,0 g | 10:28 | 60,00 | 15,79 |
| 239 | 1,5 g | ADAMAS© A-781S Dazzling Blue (CQV Co.;Ltd) | 1,0 g | 7,0 g | 10:28 | 60,00 | 15,79 |
| 240 | 1,5 g | ADAMAS© A-620S Dazzling Bronze (CQV Co.;Ltd) | 2,0 g | 7,0 g | 10:20 | 42,86 | 14,29 |
| 241 | 1,5 g | ADAMAS© A-620S Dazzling Bronze (CQV Co.; Ltd) | 1,0 g | 7,0 g | 10:28 | 60,00 | 15,79 |
| 242 | 4,5 g | ADAMAS© A-620S Dazzling Bronze (CQV Co.;Ltd) | 0,5 g | 7,0 g | 10:14 | 90,00 | 37,50 |
| 243 | 1,5 g | ADAMAS© A-640K Splendor Copper (CQV Co.;Ltd) | 2,0 g | 7,0 g | 10:20 | 42,86 | 14,29 |
| 244 | 1,5 g | ADAMAS© A-640K Splendor Copper (CQV Co.;Ltd) | 1,0 g | 7,0 g | 10:28 | 60,00 | 15,79 |
| 245 | 4,5 g | ADAMAS© A-640K Splendor Copper (CQV Co.;Ltd) | 0,5 g | 7,0 g | 10:14 | 90,00 | 37,50 |
| 246 | 1,5 g | ADAMAS© A-640S Dazzling Copper (CQV Co.;Ltd) | 2,0 g | 7,0 g | 10:20 | 42,86 | 14,29 |
| 247 | 1,5 g | ADAMAS© A-640S Dazzling Copper (CQV Co.;Ltd) | 1,0 g | 7,0 g | 10:28 | 60,00 | 15,79 |
| 248 | 4,5 g | ADAMAS© A-640S Dazzling Copper (CQV Co.;Ltd) | 0,5 g | 7,0 g | 10:14 | 90,00 | 37,50 |
| 249 | 1,5 g | ADAMAS© A-660K Splendor Russet (CQV Co.; Ltd) | 2,0 g | 7,0 g | 10:20 | 42,86 | 14,29 |
| 250 | 1,5 g | ADAMAS© A-660K Splendor Russet (CQV Co.; Ltd) | 1,0 g | 7,0 g | 10:28 | 60,00 | 15,79 |
| 251 | 4,5 g | ADAMAS© A-660K Splendor Russet (CQV Co.;Ltd) | 0,5 g | 7,0 g | 10:14 | 90,00 | 37,50 |
| 252 | 3,8 g | ADAMAS© A-660S Dazzling Russet (CQV Co.;Ltd) | 1,2 g | 7,0 g | 10:14 | 76,00 | 31,67 |
| 253 | 3,8 g | CHAOS© C-901M Rutile Ultra Silk (CQV Co.;Ltd) | 1,2 g | 7,0 g | 10:14 | 76,00 | 31,67 |
| 254 | 3,8 g | CHAOS© C-901D Rutile Fine White (CQV Co.;Ltd) | 1,2 g | 7,0 g | 10:14 | 76,00 | 31,67 |
| 255 | 3,8 g | CHAOS© C-900D Fine White (CQV Co.;Ltd) | 1,2 g | 7,0 g | 10:14 | 76,00 | 31,67 |
| 256 | 3,8 g | CHAOS© C-907K Skye White (CQV Co.;Ltd) | 1,2 g | 7,0 g | 10:14 | 76,00 | 31,67 |
| 257 | 3,8 g | CHAOS© C-901K Splendor White (CQV Co.;Ltd) | 1,2 g | 7,0 g | 10:14 | 76,00 | 31,67 |
| 258 | 3,8 g | CHAOS© C-901S Rutile Dazzling Standard (CQV Co.;Ltd) | 1,2 g | 7,0 g | 10:14 | 76,00 | 31,67 |
| 259 | 3,8 g | CHAOS© C-900S Dazzling Standard (CQV Co.;Ltd) | 1,2 g | 7,0 g | 10:14 | 76,00 | 31,67 |
| 260 | 1,5 g | CHAOS© C-902S Super White (CQV Co.;Ltd) | 1,0 g | 7,0 g | 10:28 | 60,00 | 15,79 |
| 261 | 1,5 g | CHAOS© C-109S Super Pearl (CQV Co.;Ltd) | 1,0 g | 7,0 g | 10:28 | 60,00 | 15,79 |
| 262 | 1,5 g | CHAOS© C-109B Shimmering White (CQV Co.;Ltd) | 1,0 g | 7,0 g | 10:28 | 60,00 | 15,79 |
| 263 | 1,5 g | CHAOS© C-901E Glitter Pearl (CQV Co.;Ltd) | 1,0 g | 7,0 g | 10:28 | 60,00 | 15,79 |
| 264 | 1,5 g | FERRIUS© F-620K Splendor Bronze (CQV Co.;Ltd) | 2,0 g | 7,0 g | 10:20 | 42,86 | 14,29 |
| 265 | 1,5 g | FERRIUS© F-630K Splendor Orange (CQV Co.;Ltd) | 1,0 g | 7,0 g | 10:28 | 60,00 | 15,79 |
| 266 | 4,5 g | FERRIUS© F-640K Splendor Copper (CQV Co.; Ltd) | 0,5 g | 7,0 g | 10:14 | 90,00 | 37,50 |
| 267 | 1,5 g | FERRIUS© F-660K Splendor Russet (CQV Co.; Ltd) | 2,0 g | 7,0 g | 10:20 | 42,86 | 14,29 |
| 268 | 1,5 g | FERRIUS© F-620P Crystal Bronze (CQV Co.;Ltd) | 1,0 g | 7,0 g | 10:28 | 60,00 | 15,79 |
| 269 | 4,5 g | FERRIUS© F-630P Crystal Orange (CQV Co.;Ltd) | 0,5 g | 7,0 g | 10:14 | 90,00 | 37,50 |
| 270 | 1,5 g | FERRIUS© F-640P Crystal Copper (CQV Co.;Ltd) | 2,0 g | 7,0 g | 10:20 | 42,86 | 14,29 |
| 271 | 1,5 g | FERRIUS© F-660P Crystal Russet (CQV Co.;Ltd) | 1,0 g | 7,0 g | 10:28 | 60,00 | 15,79 |
| 272 | 3,8 g | Magchrom© N-5001C Natural Corona Gold (CQV Co.;Ltd) | 1,2 g | 7,0 g | 10:14 | 76,00 | 31,67 |
| 273 | 3,8 g | Magchrom© N-5001S Natural Dazzling Gold (CQV Co.;Ltd) | 1,2 g | 7,0 g | 10:14 | 76,00 | 31,67 |
| 274 | 3,8 g | Magchrom© S-7801C Corona Blue (CQV Co.;Ltd) | 1,2 g | 7,0 g | 10:14 | 76,00 | 31,67 |
| 275 | 3,8 g | REFLEX© RCN-1008S Snow White Pearl (CQV Co.;Ltd) | 1,2 g | 7,0 g | 10:14 | 76,00 | 31,67 |

Die in der Tabelle verwendeten Perlglanzpigmente sind alle kommerziell erhältlich und besitzen folgende Zusammensetzung (in der Spalte "Teilchengrößen" sind jeweils der d₁₀ - d₉₀ -Wert gemessen mit Malvern angegeben):

| **Handelsname** | **Hersteller** | **Substrat** | **Beschicht ung** | **Teilchengröße [µm]** |
|---|---|---|---|---|
| Xirallic© Crystal Silver | Merck KGaA | Al₂O₃ | TiO₂ | 5 - 35 |
| Iriodin© 103 | Merck KGaA | Natural mica | TiO₂ | 10 - 60 |
| Iriodin© 305 | Merck KGaA | Naturalmica | Fe₂O₃ und TiO₂ | 10 - 60 |
| Iriodin© 4504 Lava Red | Merck KGaA | SiO₂ | Fe₂O₃ | 5 - 50 |
| Iriodin© 9219 | Merck KGaA | Natural mica | TiO₂ | 10 - 60 |
| Iriodin© 9444 | Merck KGaA | Natural mica | Cr₂O₃ | 5 - 40 |
| Iriodin© 9504 | Merck KGaA | Natural mica | Fe₂O₃ | 10 - 60 |
| Xirallic© F60-50 | Merck KGaA | Al₂O₃ | Fe₂O₃ | 5 - 35 |
| Xirallic© F60-51 | Merck KGaA | Al₂O₃ | Fe₂O₃ | 5 - 35 |
| Pyrisma© M40-58 | Merck KGaA | Natural mica | Fe₂O₃ und TiO₂ | 5 - 40 |
| SynCrystal© Silver | Eckart GmbH | Synthetic mica | TiO₂ | 10 - 50 |
| SYMIC© B001 Silber | Eckart GmbH | Synthetic mica | TiO₂ | 5 -25 |
| SYMIC© C001 Silber | Eckart GmbH | Synthetic mica | TiO₂ | 10 -40 |
| SYMIC© C604 Silber | Eckart GmbH | Synthetic mica | TiO₂ | 10 -40 |
| SYMIC© OEM X-fine Silver | Eckart GmbH | Synthetic mica | TiO₂ | 3 - 15 |
| SYMIC© C393 Gold | Eckart GmbH | Synthetic mica | Fe₂O₃ und TiO₂ | 10 - 40 |
| SYMIC© C522 Erdfarbton Kupfer: | Eckart GmbH | Synthetic mica | Fe₂O₃ | 10 - 40 |
| SYMIC© C542 Erdfarbton Feuer-Rot | Eckart GmbH | Synthetic mica | Fe₂O₃ | 10 - 40 |
| SYMIC© OEM Medium Space Gold | Eckart GmbH | Synthetic mica | Fe₂O₃ und TiO₂ | 12 - 38 |
| Magnapearl© 1000 | BASF AG | Natural mica | TiO₂ | 6 - 48 |
| Magnapearl© 2000 | BASF AG | Natural mica | TiO₂ | 5 - 25 |
| Magnapearl© 3100 | BASF AG | Natural mica | TiO₂ | 2 - 10 |
| Lumina© Brass 9232D | BASF AG | Natural mica | Fe₂O₃ und TiO₂ | 10 - 48 |
| Lumina© Copper 9350D | BASF AG | Natural mica | Fe₂O₃ | 8 - 48 |
| Lumina© Exterior Gold 2303D | BASF AG | Natural mica | TiO₂ | 8 - 48 |
| Lumina© Russet 9450D | BASF AG | Natural mica | Fe₂O₃ | 8 - 48 |
| Lumina© Royal Copper | BASF AG | Natural mica | TiO₂ | 10 - 34 |
| Lumina© Royal Magenta | BASF AG | Natural mica | TiO₂ | 10 - 34 |
| Lumina© Royal Blue | BASF AG | Natural mica | TiO₂ | 10 - 34 |
| Exterior Polar White KC9119-SW | Fujian Kuncai Fine Chemicals Co.,Ltd. | Natural mica | TiO₂ | 5 - 25 |
| Exterior Sterling White KC9103-SW | Fujian Kuncai Fine Chemicals Co.,Ltd. | Natural mica | TiO₂ | 10 - 45 |
| Exterior Fine Gold Satin KC9201-SW | Fujian Kuncai Fine Chemicals Co.,Ltd. | Natural mica | TiO₂ | 5 - 25 |
| Exterior Platinum Pearl KC9205-SW | Fujian Kuncai Fine Chemicals Co.,Ltd. | Natural mica | TiO₂ | 10 - 45 |
| Exterior Royal Gold KC9303-SW | Fujian Kuncai Fine Chemicals Co.,Ltd. | Natural mica | Fe₂O₃ und TiO₂ | 10 - 45 |
| Exterior Royal Gold Satin KC9323-SW | Fujian Kuncai Fine Chemicals Co.,Ltd. | Natural mica | Fe₂O₃ und TiO₂ | 5 - 25 |
| Exterior Bright Gold KC9307-SW | Fujian Kuncai Fine Chemicals Co.,Ltd. | Natural mica | Fe₂O₃ und TiO₂ | 10 - 60 |
| Exterior Brown KC9502-SW | Fujian Kuncai Fine Chemicals Co.,Ltd. | Natural mica | Fe₂O₃ | 8 - 45 |
| Exterior Wine Red KC9504-SW | Fujian Kuncai Fine Chemicals Co.,Ltd. | Natural mica | Fe₂O₃ | 8 - 45 |
| Exterior Ruby KC9508-SW | Fujian Kuncai Fine chemicals Co.,Ltd. | Natural mica | Fe₂O₃ | 8 - 45 |
| ADAMAS© A-100D | CQV Co.,Ltd.. | Al₂O₃ | TiO₂ | 3 - 30 |
| ADAMAS© A-901K Splendor White | CQV Co.,Ltd.. | Al₂O₃ | TiO₂ | 5 - 30 |
| ADAMAS© A-901S Dazzling White | CQV Co.,Ltd.. | Al₂O₃ | TiO₂ | 9 - 45 |
| ADAMAS© A-901K Splendor Gold | CQV Co.,Ltd. | Al₂O₃ | TiO₂ | 5 - 30 |
| ADAMAS© A-701S Dazzling Gold | CQV Co.,Ltd. | Al₂O₃ | TiO₂ | 9 - 45 |
| ADAMAS© A-741S Dazzling Red | CQV Co.,Ltd. | Al₂O₃ | TiO₂ | 9 - 45 |
| ADAMAS© A-781K Splendor Blue | CQV Co.,Ltd. | Al₂O₃ | TiO₂ | 5 - 30 |
| ADAMAS© A-781S Dazzlinq Blue | CQV Co.,Ltd. | Al₂O₃ | TiO₂ | 9 - 45 |
| ADAMAS© A-620S Dazzlinq Bronze | CQV Co.,Ltd. | Al₂O₃ | Fe₂O₃ | 9 - 45 |
| ADAMAS© A-640S Dazzling Copper | CQV Co.,Ltd. | Al₂O₃ | Fe₂O₃ | 9 - 45 |
| ADAMAS© A-660S Dazzling Russet | CQV Co.,Ltd. | Al₂O₃ | Fe₂O₃ | 9 - 45 |
| CHAOS© C-901M Rutile Ultra Silk | CQV Co.,Ltd. | Synthetic mica | TiO₂ | 3 - 17 |
| CHAOS© C-901D Rutile Fine White | CQV Co.,Ltd. | Synthetic mica | TiO₂ | 5 - 25 |
| CHAOS© C-900D Fine White | CQV Co.,Ltd. | Synthetic mica | TiO₂ | 5 - 25 |
| CHAOS© C-907K Skye White | CQV Co.,Ltd. | Synthetic mica | TiO₂ | 5 - 35 |
| CHAOS© C-901K Splendor White | CQV Co.,Ltd. | Synthetic mica | TiO₂ | 5 - 35 |
| CHAOS© C-901S Rutile Dazzling Standard | CQV Co.,Ltd. | Synthetic mica | TiO₂ | 9 - 45 |
| CHAOS© C-900S Dazzlinq Standard | CQV Co.,Ltd. | Synthetic mica | TiO₂ | 9 - 45 |
| CHAOS© C-902S Super White | CQV Co.,Ltd. | Synthetic mica | TiO₂ | 9 - 45 |
| CHAOS© C-109S Super Pearl | CQV Co.,Ltd. | Synthetic mica | TiO₂ | 9 - 41 |
| CHAOS© C-109B Shimmering White | CQV Co.,Ltd. | Synthetic mica | TiO₂ | 13 - 60 |
| CHAOS© C-901E Glitter Pearl | CQV Co.,Ltd. | Synthetic mica | TiO₂ | 17 - 100 |
| FERRIUS© F-620K Splendor Bronze | CQV Co.,Ltd. | Synthetic mica | Fe₂O₃ | 5 - 35 |
| FERRIUS© F-630K Splendor Orange | CQV Co.,Ltd. | Synthetic mica | Fe₂O₃ | 5 - 35 |
| FERRIUS© F-640K Splendor Copper | CQV Co.,Ltd. | Synthetic mica | Fe₂O₃ | 5 - 35 |
| FERRIUS© F-660K Splendor Russet | CQV Co.,Ltd. | Synthetic mica | Fe₂O₃ | 5 - 35 |
| FERRIUS© F-620P Crystal Bronze | CQV Co.,Ltd. | Synthetic mica | Fe₂O₃ | 25 - 150 |
| FERRIUS© F-630P Crystal Orange | CQV Co.,Ltd. | Synthetic mica | Fe₂O₃ | 25 - 150 |
| FERRIUS© F-640P Crystal Copper | CQV Co.,Ltd. | Synthetic mica | Fe₂O₃ | 25 - 150 |
| FERRIUS© F-660P Crystal Russet | CQV Co.,Ltd. | Synthetic mica | Fe₂O₃ | 25 - 150 |
| Magchrom© N-5001C Natural Corona Gold | CQV Co.,Ltd. | Nat. mica | TiO₂ | 7 - 30 |
| Magchrom© N-5001S Natural Dazzling Gold | CQV Co.,Ltd. | Nat. mica | TiO₂ | 9 - 45 |
| Magchrom© S-7801C Corona Blue | CQV Co.,Ltd. | Synthetic mica | TiO₂ | 7 - 27 |

Die nachfolgenden Schritte 2-4 sind unabhängig von der Zusammensetzung der Druckpaste.

### 2) Bedrucken der Fliesen

Die erhaltene Druckpaste kann über gängige Druckverfahren, Schlickerverfahren, Sprühapplikation oder Transferdruck auf Fliesen aufgebracht werden. In allen Fällen wird die bedruckte Fliese im Trockenschrank oder Abzug bei Temperaturen von 60 - 110 °C getrocknet, um das enthaltene Lösungsmittel im Drucköl abzudampfen. Bei den erfindungsgemäßen Beispielen wird die Druckpaste mittels Rakel und Drucksieb auf die Fliesen aufgebracht.

### 3) Brennen der bedruckten Fliesen

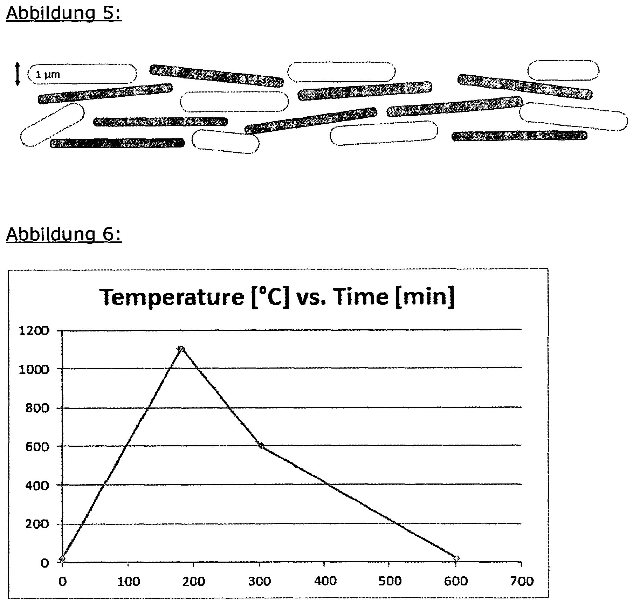

Die bedruckte und getrocknete Fliese wird nun im Brennofen mittels eines Temperaturprofiles gemäß Abbildung 6 gebrannt.
180 min : Heizen auf 1100 °C,
3 min : Halten bei 1100 °C,
120 min : schnelles Abkühlen auf 600 °C,
300 min : langsames Abkühlen auf Raumtemperatur.

Die Temperaturführung als Funktion der Zeit ist dargestellt in Abbildung 6.

Die glasierten Fliesen der Beispiele 1 bis 275 zeichnen sich dadurch aus, dass die gewünschten optischen Effekte in der Hochtemperaturanwendung > 1100 °C stabil und reproduzierbar zugänglich sind.

## Patentansprüche

1. Pigment/Fritten-Gemisch dadurch gekennzeichent, dass der Anteil an Perlglanzpigment in dem Gemisch 5-95 Gew.% beträgt und die Fritte mindestens 5 Gew.% Al₂O₃ bezogen auf die Fritte enthält, wobei das Verhältnis Dicke des Perlglanzpigmentes zur Größe des Fritten-Teilchens im Mittel in mindestens einer Dimension 0,01 - 2 beträgt.

2. Pigment/Fritten-Gemisch nach Anspruch 1, **dadurch gekennzeichnet, dass** das Perlglanzgiment auf plättchenförmigen Substraten basiert.

3. Pigment/Fritten-Gemisch nach einem oder mehreren der Ansprüche 1 bis 3, **dadurch gekennzeichnet, dass** die plättchenförmigen Substrate ausgewählt sind aus der Gruppe synthetische Glimmerplättchen, natürliche Glimmerplättchen, Al₂O₃-Plättchen, SiO₂-Plättchen, Fe₂O₃-Plättchen, B₄C-Plättchen, TiO₂-Plättchen, SiC-Plättchen, BN-Plättchen und Graphit-Plättchen.

4. Pigment/Fritten-Gemisch nach einem oder mehreren der Ansprüche 1 bis 3, **dadurch gekennzeichnet, dass** die Plättchen mit ein oder mehreren Schichten aus Metalloxid/en, Metallsulfiden, seltenen Erdmetalloxiden und/oder Metall(en) oder den Gemischen daraus belegt sind.

5. Pigment/Fritten-Gemisch nach einem oder mehreren der Ansprüche 1 bis 4, **dadurch gekennzeichnet, dass** die Plättchen auf der Oberfläche mit ein oder mehreren Schichten ausgewählt aus der Gruppe TiO₂, Fe₂O₃, ZrO₂, SnO₂, TiO₂/Fe₂O₃, Fe₂TiO₅, FeTiO₃, FeOOH, Fe₃O₄, Cr₂O₃, TiOₓ wobei x = 1,50 - 1,95 ist, belegt sind.

6. Pigment/Fritten-Gemisch nach einem oder mehreren der Ansprüche 1 bis 5, **dadurch gekennzeichnet dass** die Plättchen eine Teilchendicke von 0,05 - 5,0 µm aufweisen.

7. Pigment/Fritten-Gemisch nach einem oder mehreren der Ansprüche 1 bis 6, **dadurch gekennzeichnet, dass** die Frittenteilchen Partikelgrößen von 1 - 500 µm aufweisen.

8. Pigment/Fritten-Gemisch nach einem oder mehreren der Ansprüche 1 bis 7, **dadurch gekennzeichnet, dass** die Fritte CaO, Na20, K₂O, BaO, Al₂O₃, Si02, B₂O₃ enthält.

9. Pigment/Fritten-Gemisch nach einem oder mehreren der Ansprüche 1 bis 8, **dadurch gekennzeichnet, dass** die Fritte ≥ 5 Gew.% Al₂O₃ und ≥ 50 Gew.% an SiO₂ bezogen auf die Fritte enthält, wobei die Gesamtheit aller Bestandteile der Fritte 100 % beträgt.

10. Pigment/Fritten-Gemisch nach einem oder mehreren der Ansprüche 1 bis 9, **dadurch gekennzeichnet, dass** die Perlglanzpigmente ausgewählt sind aus der nachfolgenden Gruppe an Pigmenten:
Substratplättchen + TiO₂
Substratplättchen + Fe₂O₃
Substratplättchen + Fe₃O₄
Substratplättchen + TiO₂/Fe₂O₃
Substratplättchen + FeTiO₃
Substratplättchen + Fe₂TiO₅
Substratplättchen + ZrO₂
Substratplättchen + ZnO
Substratplättchen + SnO₂
Substratplättchen + Cr₂O₃
Substratplättchen + Ce₂O₃
Substratplättchen + TiOₓ (reduziert), wobei x = 1,50 - 1,95
Substratplättchen + TiO₂ + Fe₂O₃
Substratplättchen + TiO₂ + Fe₃O₄
Substratplättchen + Fe₂O₃ + TiO₂
Substratplättchen + TiO₂ + SiO₂ + TiO₂
Substratplättchen + TiO₂ + SnO₂ + TiO₂
Substratplättchen + TiO₂ + Al₂O₃ + TiO₂
Substratplättchen + Fe₂O₃ + SiO₂ + TiO₂
Substratplättchen + TiO₂/Fe₂O₃ + SiO₂ + TiO₂
Substratplättchen + TiO₂/Fe₂O₃ + SiO₂ + TiO₂/Fe₂O₃
Substratplättchen + Ti02/Fe203 + SiO₂ + TiO₂ + TiO₂/Fe₂O₃
Substratplättchen + TiO₂ + SiO₂ + TiO₂/Fe₂O₃
Substratplättchen + TiO₂ + SiO₂
Substratplättchen + TiO₂ + Al₂O₃
Substratplättchen + TiO₂ + MgO x SiO₂ + TiO₂
Substratplättchen + Fe₂O₃ + MgO x SiO₂ + TiO₂
Substratplättchen + TiO₂/Fe₂O₃ + MgO x SiO₂ + TiO₂
Substratplättchen + TiO₂/Fe₂O₃ + MgO x SiO₂ + TiO₂/Fe₂O₃
Substratplättchen + TiO₂/Fe₂O₃ + MgO x SiO₂ + TiO₂ + TiO₂/Fe₂O₃
Substratplättchen + TiO₂ + MgO x SiO₂ + TiO₂/Fe₂O₃
Substratplättchen + SnO₂ + TiO₂ + SiO₂ + SnO₂ + TiO₂
Substratplättchen + SnO₂ + TiO₂ + SnO₂ + TiO₂
Substratplättchen + SnO₂ + TiO₂ + Fe₂O₃ + SiO₂ + SnO₂ + TiO₂ + Fe₂O₃
Substratplättchen + Fe₂O₃ + SnO₂ + TiO₂
Substratplättchen + Fe₂O₃ + SnO₂ + Fe₂O₃
Substratplättchen + TiO₂ + SnO₂ + TiO₂
Substratplättchen + TiO₂/Fe₂O₃ + SnO₂ + TiO₂
Substratplättchen + TiO₂/Fe₂O₃ + SnO₂ + TiO₂/Fe₂O₃
Substratplättchen + SnO₂ + TiO₂ + Fe₂O₃ + SnO₂ + TiO₂ + Fe203.
Substratplättchen + Fe₂TiO₅ + SnO₂ + Fe₂TiO₅
Substratplättchen + Fe₂TiO₅ + SiO₂ + Fe₂TiO₅

11. Pigment/Fritten-Gemisch nach einem oder mehreren der Ansprüche 1 bis 10, **dadurch gekennzeichnet, dass** die Perlglanzpigmente auf dem Substrat-Plättchen eine erste niedrig-brechende Schicht (= NBS) aus Al₂O₃, SiO₂, Zirkonsilikat ZrSiO₄, Mullit 3Al₂O₃ x 2SiO₂ bzw. 2Al₂O₃ x SiO₂ (Sinter- bzw. Schmelzmullit) oder Erdalkali-Silikat (MSiO₃ ; mit M = Mg²⁺, Ca²⁺, Sr²⁺, Ba²⁺ oder M₂Si₃O₈; mit M = Mg²⁺, Ca²⁺, Sr²⁺, Ba²⁺) aufweisen und aus der nachfolgenden Gruppe an Pigmenten ausgewählt sind:
Substratplättchen + NBS + TiO₂
Substratplättchen + NBS + Fe₂O₃
Substratplättchen + NBS + Fe₃O₄
Substratplättchen + NBS + TiO₂/Fe₂O₃
Substratplättchen + NBS + FeTiO₃
Substratplättchen + NBS + Fe₂TiO₅
Substratplättchen + NBS + ZrO₂
Substratplättchen + NBS + ZnO
Substratplättchen + NBS + SnO₂
Substratplättchen + NBS + Cr₂O₃
Substratplättchen + NBS + Ce₂O₃
Substratplättchen + NBS + TiOₓ (reduziert), wobei x = 1,50 - 1,95
Substratplättchen + NBS + TiO₂ + Fe₂O₃
Substratplättchen + NBS + TiO₂ + Fe₃O₄
Substratplättchen + NBS + Fe₂O₃ + TiO₂
Substratplättchen + NBS + TiO₂ + SiO₂ + TiO₂
Substratplättchen + NBS + TiO₂ + SnO₂ + TiO₂
Substratplättchen + NBS + TiO₂ + Al₂O₃ + TiO₂
Substratplättchen + NBS + Fe₂O₃ + SiO₂ + TiO₂
Substratplättchen + NBS + TiO₂/Fe₂O₃ + SiO₂ + TiO₂
Substratplättchen + NBS + TiO₂/Fe₂O₃ + SiO₂ + TiO₂/Fe₂O₃
Substratplättchen + NBS + TiO₂/Fe₂O₃ + SiO₂ + TiO₂ + TiO₂/Fe₂O₃
Substratplättchen + NBS + TiO₂ + SiO₂ + TiO₂/Fe₂O₃
Substratplättchen + NBS + TiO₂ + SiO₂
Substratplättchen + NBS + TiO₂ + Al₂O₃
Substratplättchen + NBS + TiO₂ + MgO x SiO₂ + TiO₂
Substratplättchen + NBS + Fe₂O₃ + MgO x SiO₂ + TiO₂
Substratplättchen + NBS + TiO₂/Fe₂O₃ + MgO x SiO₂ + TiO₂
Substratplättchen + NBS + TiO₂/Fe₂O₃ + MgO x SiO₂ + TiO₂/Fe₂O₃
Substratplättchen + NBS + TiO₂/Fe₂O₃ + MgO x SiO₂ + TiO₂ + TiO₂/Fe₂O₃
Substratplättchen + NBS + TiO₂ + MgO x SiO₂ + TiO₂/Fe₂O₃
Substratplättchen + NBS + SnO₂ + TiO₂ + SiO₂ + SnO₂ + TiO₂
Substratplättchen + NBS + SnO₂ + TiO₂ + SnO₂ + TiO₂
Substratplättchen + NBS + SnO₂ + TiO₂ + Fe₂O₃ + SiO₂ + SnO₂ + TiO₂ + Fe₂O₃
Substratplättchen + NBS + Fe₂O₃ + SnO₂ + TiO₂
Substratplättchen + NBS + Fe₂O₃ + SnO₂ + Fe₂O₃
Substratplättchen + NBS + TiO₂ + SnO₂ + TiO₂
Substratplättchen + NBS + TiO₂/Fe₂O₃ + SnO₂ + TiO₂
Substratplättchen + NBS + TiO₂/Fe₂O₃ + SnO₂ + TiO₂/Fe₂O₃
Substratplättchen + NBS + SnO₂ + TiO₂ + Fe₂O₃ + SnO₂ + TiO₂ + Fe₂O₃
Substratplättchen + NBS + Fe₂TiO₅ + SnO₂ + Fe₂TiO₅
Substratplättchen + NBS + Fe₂TiO₅ + SiO₂ + Fe₂TiO₅

12. Verwendung des Pigment/Fritten-Gemisches nach einem oder mehreren der Ansprüche 1 bis 11 in ungebrannten oder gebrannten Ziegeln, ungebrannten oder gebrannten Ton- und Keramikwaren, keramischen Glasuren.

13. Verwendung des Pigment/Fritten-Gemisches nach Anspruch 12 für Dekorfliesen.

14. Verwendung des Pigment/Fritten-Gemisches nach Anspruch 12 für Porzellanglasuren.

15. Formulierungen enthaltend das Pigment/Fritten-Gemisch nach einem oder mehreren der Ansprüche 1 bis 11.

## Claims

1. Pigment/frit mixture, **characterised in that** the proportion of pearlescent pigment in the mixture is 5-95% by weight and the frit comprises at least 5% by weight of Al₂O₃, based on the frit, where the ratio of the thickness of the pearlescent pigment to the size of the frit particle on average in at least one dimension is 0.01 - 2.

2. Pigment/frit mixture according to Claim 1, **characterised in that** the pearlescent pigment is based on flake-form substrates.

3. Pigment/frit mixture according to one or more of Claims 1 to 3, **characterised in that** the flake-form substrates are selected from the group synthetic mica flakes, natural mica flakes, Al₂O₃ flakes, SiO₂ flakes, Fe₂O₃ flakes, B₄C flakes, TiO₂ flakes, SiC flakes, BN flakes and graphite flakes.

4. Pigment/frit mixture according to one or more of Claims 1 to 3, **characterised in that** the flakes are covered with one or more layers of metal oxide(s), metal sulfides, rare-earth metal oxides and/or metal(s) or mixtures thereof.

5. Pigment/frit mixture according to one or more of Claims 1 to 4, **characterised in that** the flakes are covered on the surface with one or more layers selected from the group TiO₂, Fe₂O₃, ZrO₂, SnO₂, TiO₂/Fe₂O₃, Fe₂TiO₅, FeTiO₃, FeOOH, Fe₃O₄, Cr₂O₃ and TiOₓ, where x = 1.50 - 1.95.

6. Pigment/frit mixture according to one or more of Claims 1 to 5, **characterised in that** the flakes have a particle thickness of 0.05 - 5.0 µm.

7. Pigment/frit mixture according to one or more of Claims 1 to 6, **characterised in that** the frit particles have particle sizes of 1 - 500 µm.

8. Pigment/frit mixture according to one or more of Claims 1 to 7, **characterised in that** the frit comprises CaO, Na₂O, K₂O, BaO, Al₂O₃, SiO₂ or B₂O₃.

9. Pigment/frit mixture according to one or more of Claims 1 to 8, **characterised in that** the frit comprises ≥ 5% by weight of Al₂O₃ and ≥ 50% by weight of SiO₂, based on the frit, where the totality of all constituents of the frit is 100%.

10. Pigment/frit mixture according to one or more of Claims 1 to 9, **characterised in that** the pearlescent pigments are selected from the following group of pigments:
substrate flake + TiO₂
substrate flake + Fe₂O₃
substrate flake + Fe₃O₄
substrate flake + TiO₂/Fe₂O₃
substrate flake + FeTiO₃
substrate flake + Fe₂TiO₅
substrate flake + ZrO₂
substrate flake + ZnO
substrate flake + SnO₂
substrate flake + Cr₂O₃
substrate flake + Ce₂O₃
substrate flake + TiOₓ (reduced), where x = 1.50 - 1.95
substrate flake + TiO₂ + Fe₂O₃
substrate flake + TiO₂ + Fe₃O₄
substrate flake + Fe₂O₃ + TiO₂
substrate flake + TiO₂ + SiO₂ + TiO₂
substrate flake + TiO₂ + SnO₂ + TiO₂
substrate flake + TiO₂ + Al₂O₃ + TiO₂
substrate flake + Fe₂O₃ + SiO₂ + TiO₂
substrate flake + TiO₂/Fe₂O₃ + SiO₂ + TiO₂
substrate flake + TiO₂/Fe₂O₃ + SiO₂ + TiO₂/Fe₂O₃
substrate flake + TiO₂/Fe₂O₃ + SiO₂ + TiO₂ + TiO₂/Fe₂O₃
substrate flake + TiO₂ + SiO₂ + TiO₂/Fe₂O₃
substrate flake + TiO₂ + SiO₂
substrate flake + TiO₂ + Al₂O₃
substrate flake + TiO₂ + MgO x SiO₂ + TiO₂
substrate flake + Fe₂O₃ + MgO x SiO₂ + TiO₂
substrate flake + TiO₂/Fe₂O₃ + MgO x SiO₂ + TiO₂
substrate flake + TiO₂/Fe₂O₃ + MgO x SiO₂ + TiO₂/Fe₂O₃
substrate flake + TiO₂/Fe₂O₃ + MgO x SiO₂ + TiO₂ + TiO₂/Fe₂O₃
substrate flake + TiO₂ + MgO x SiO₂ + TiO₂/Fe₂O₃
substrate flake + SnO₂ + TiO₂ + SiO₂ + SnO₂ + TiO₂
substrate flake + SnO₂ + TiO₂ + SnO₂ + TiO₂
substrate flake + SnO₂ + TiO₂ + Fe₂O₃ + SiO₂ + SnO₂ + TiO₂ + Fe₂O₃
substrate flake + Fe₂O₃ + SnO₂ + TiO₂
substrate flake + Fe₂O₃ + SnO₂ + Fe₂O₃
substrate flake + TiO₂ + SnO₂ + TiO₂
substrate flake + TiO₂/Fe₂O₃ + SnO₂ + TiO₂
substrate flake + TiO₂/Fe₂O₃ + SnO₂ + TiO₂/Fe₂O₃
substrate flake + SnO₂ + TiO₂ + Fe₂O₃ + SnO₂ + TiO₂ + Fe₂O₃
substrate flake + Fe₂TiO₅ + SnO₂ + Fe₂TiO₅
substrate flake + Fe₂TiO₅ + SiO₂ + Fe₂TiO₅

11. Pigment/frit mixture according to one or more of Claims 1 to 10, **characterised in that** the pearlescent pigments on the substrate flake have a first low refraction layer (= LRL) comprising Al₂O₃, SiO₂, zirconium silicate ZrSiO₄, mullite 3Al₂O₃ x 2SiO₂ or 2Al₂O₃ x SiO₂ (sintered or fused mullite) or alkaline-earth metal silicate (MSiO₃, where M = Mg²⁺, Ca²⁺, Sr²⁺ or Ba²⁺ , or M₂Si₃O₈, where M = Mg²⁺, Ca²⁺, Sr²⁺ or Ba²⁺) and are selected from the following group of pigments:
substrate flake + LRL + TiO₂
substrate flake + LRL + Fe₂O₃
substrate flake + LRL + Fe₃O₄
substrate flake + LRL + TiO₂/Fe₂O₃
substrate flake + LRL + FeTiO₃
substrate flake + LRL + Fe₂TiO₅
substrate flake + LRL + ZrO₂
substrate flake + LRL + ZnO
substrate flake + LRL + SnO₂
substrate flake + LRL + Cr₂O₃
substrate flake + LRL + Ce₂O₃
substrate flake + LRL + TiOₓ (reduced), where x = 1.50 - 1.95
substrate flake + LRL + TiO₂ + Fe₂O₃
substrate flake + LRL + TiO₂ + Fe₃O₄
substrate flake + LRL + Fe₂O₃ + TiO₂
substrate flake + LRL + TiO₂ + SiO₂ + TiO₂
substrate flake + LRL + TiO₂ + SnO₂ + TiO₂
substrate flake + LRL + TiO₂ + Al₂O₃ + TiO₂
substrate flake + LRL + Fe₂O₃ + SiO₂ + TiO₂
substrate flake + LRL + TiO₂/Fe₂O₃ + SiO₂ + TiO₂
substrate flake + LRL + TiO₂/Fe₂O₃ + SiO₂ + TiO₂/Fe₂O₃
substrate flake + LRL + TiO₂/Fe₂O₃ + SiO₂ + TiO₂ + TiO₂/Fe₂O₃
substrate flake + LRL + TiO₂ + SiO₂ + TiO₂/Fe₂O₃
substrate flake + LRL + TiO₂ + SiO₂
substrate flake + LRL + TiO₂ + Al₂O₃
substrate flake + LRL + TiO₂ + MgO x SiO₂ + TiO₂
substrate flake + LRL + Fe₂O₃ + MgO x SiO₂ + TiO₂
substrate flake + LRL + TiO₂/Fe₂O₃ + MgO x SiO₂ + TiO₂
substrate flake + LRL + TiO₂/Fe₂O₃ + MgO x SiO₂ + TiO₂/Fe₂O₃
substrate flake + LRL + TiO₂/Fe₂O₃ + MgO x SiO₂ + TiO₂ + TiO₂/Fe₂O₃
substrate flake + LRL + TiO₂ + MgO x SiO₂ + TiO₂/Fe₂O₃
substrate flake + LRL + SnO₂ + TiO₂ + SiO₂ + SnO₂ + TiO₂
substrate flake + LRL + SnO₂ + TiO₂ + SnO₂ + TiO₂
substrate flake + LRL + SnO₂ + TiO₂ + Fe₂O₃ + SiO₂ + SnO₂ + TiO₂ + Fe₂O₃
substrate flake + LRL + Fe₂O₃ + SnO₂ + TiO₂
substrate flake + LRL + Fe₂O₃ + SnO₂ + Fe₂O₃
substrate flake + LRL + TiO₂ + SnO₂ + TiO₂
substrate flake + LRL + TiO₂/Fe₂O₃ + SnO₂ + TiO₂
substrate flake + LRL + TiO₂/Fe₂O₃ + SnO₂ + TiO₂/Fe₂O₃
substrate flake + LRL + SnO₂ + TiO₂ + Fe₂O₃ + SnO₂ + TiO₂ + Fe₂O₃
substrate flake + LRL + Fe₂TiO₅ + SnO₂ + Fe₂TiO₅
substrate flake + LRL + Fe₂TiO₅ + SiO₂ + Fe₂TiO₅

12. Use of the pigment/frit mixture according to one or more of Claims 1 to 11 in unfired or fired bricks, unfired or fired earthenware and ceramicware or ceramic glazes.

13. Use of the pigment/frit mixture according to Claim 12 for decorative tiles.

14. Use of the pigment/frit mixture according to Claim 12 for porcelain glazes.

15. Formulations comprising the pigment/frit mixture according to one or more of Claims 1 to 11.

## Revendications

1. Mélange de pigment(s)/fritte(s), **caractérisé en ce que** la proportion de pigment perlé dans le mélange est de 5-95% en poids et la fritte comprend au moins 5% en poids d'Al₂O₃, sur la base de la fritte, dans lequel le rapport de l'épaisseur du pigment perlé sur la taille de la particule de fritte en moyenne dans au moins une dimension est de 0,01 - 2.

2. Mélange de pigment(s)/fritte(s) selon la revendication 1, **caractérisé en ce que** le pigment perlé est basé sur des substrats sous forme de flocons.

3. Mélange de pigment(s)/fritte(s) selon une ou plusieurs des revendications 1 et 2, **caractérisé en ce que** les substrats sous forme de flocons sont sélectionnés parmi le groupe qui est constitué par les flocons de mica synthétique, les flocons de mica naturel, les flocons d'Al₂O₃, les flocons de SiO₂, les flocons de Fe₂O₃, les flocons de B₄C, les flocons de TiO₂, les flocons de SiC, les flocons de BN et les flocons de graphite.

4. Mélange de pigment(s)/fritte(s) selon une ou plusieurs des revendications 1 à 3, **caractérisé en ce que** les flocons sont recouverts d'une ou de plusieurs couche(s) d'oxyde(s) de métal/métaux, de sulfures de métal/métaux, d'oxydes de métal/métaux et/ou de métal/métaux des terres rares ou de combinaisons de ceux-ci.

5. Mélange de pigment(s)/fritte(s) selon une ou plusieurs des revendications 1 à 4, **caractérisé en ce que** les flocons sont recouverts sur la surface d'une ou de plusieurs couche(s) qui est/sont sélectionnée(s) parmi le groupe qui est constitué par le TiO₂, le Fe₂O₃, le ZrO₂, le SnO₂, le TiO₂/Fe₂O₃, le Fe₂TiO₅, le FeTiO₃, le FeOOH, le Fe₃O₄, le Cr₂O₃ et le TiOₓ, où x = 1,50 - 1,95.

6. Mélange de pigment(s)/fritte(s) selon une ou plusieurs des revendications 1 à 5, **caractérisé en ce que** les flocons présentent une épaisseur de particule de 0,05 - 5,0 µm.

7. Mélange de pigment(s)/fritte(s) selon une ou plusieurs des revendications 1 à 6, **caractérisé en ce que** les particules de fritte présentent des tailles de particule de 1 - 500 µm.

8. Mélange de pigment(s)/fritte(s) selon une ou plusieurs des revendications 1 à 7, **caractérisé en ce que** la fritte comprend du CaO, du Na₂O, du K₂O, du BaO, de l'Al₂O₃, du SiO₂ ou du B₂O₃.

9. Mélange de pigment(s)/fritte(s) selon une ou plusieurs des revendications 1 à 8, **caractérisé en ce que** la fritte comprend ≥ 5% en poids d'Al₂O₃ et ≥ 50% en poids de SiO₂, sur la base de la fritte, où la totalité de tous les constituants de la fritte représente 100%.

10. Mélange de pigment(s)/fritte(s) selon une ou plusieurs des revendications 1 à 9, **caractérisé en ce que** les pigments perlés sont sélectionnés parmi le groupe de pigments qui suit :
flocon de substrat + TiO₂
flocon de substrat + Fe₂O₃
flocon de substrat + Fe₃O₄
flocon de substrat + TiO₂/Fe₂O₃
flocon de substrat + FeTiO₃
flocon de substrat + Fe₂TiO₅
flocon de substrat + ZrO₂
flocon de substrat + ZnO
flocon de substrat + SnO₂
flocon de substrat + Cr₂O₃
flocon de substrat + Ce₂O₃
flocon de substrat + TiOₓ (réduit), où x = 1,50 - 1,95
flocon de substrat + TiO₂ + Fe₂O₃
flocon de substrat + TiO₂ + Fe₃O₄
flocon de substrat + Fe₂O₃ + TiO₂
flocon de substrat + TiO₂ + SiO₂ + TiO₂
flocon de substrat + TiO₂ + SnO₂ + TiO₂
flocon de substrat + TiO₂ + Al₂O₃ + TiO₂
flocon de substrat + Fe₂O₃ + SiO₂ + TiO₂
flocon de substrat + TiO₂/Fe₂O₃ + SiO₂ + TiO₂
flocon de substrat + TiO₂/Fe₂O₃ + SiO₂ + TiO₂/Fe₂O₃
flocon de substrat + TiO₂/Fe₂O₃ + SiO₂ + TiO₂ + TiO₂/Fe₂O₃
flocon de substrat + TiO₂ + SiO₂ + TiO₂/Fe₂O₃
flocon de substrat + TiO₂ + SiO₂
flocon de substrat + TiO₂ + Al₂O₃
flocon de substrat + TiO₂ + MgO x SiO₂ + TiO₂
flocon de substrat + Fe₂O₃ + MgO x SiO₂ + TiO₂
flocon de substrat + TiO₂/Fe₂O₃ + MgO x SiO₂ + TiO₂
flocon de substrat + TiO₂/Fe₂O₃ + MgO x SiO₂ + TiO₂/Fe₂O₃
flocon de substrat + TiO₂/Fe₂O₃ + MgO x SiO₂ + TiO₂ + TiO₂/Fe₂O₃
flocon de substrat + TiO₂ + MgO x SiO₂ + TiO₂/Fe₂O₃
flocon de substrat + SnO₂ + TiO₂ + SiO₂ + SnO₂ + TiO₂
flocon de substrat + SnO₂ + TiO₂ + SnO₂ + TiO₂
flocon de substrat + SnO₂ + TiO₂ + Fe₂O₃ + SiO₂ + SnO₂ + TiO₂ + Fe₂O₃
flocon de substrat + Fe₂O₃ + SnO₂ + TiO₂
flocon de substrat + Fe₂O₃ + SnO₂ + Fe₂O₃
flocon de substrat + TiO₂ + SnO₂ + TiO₂
flocon de substrat + TiO₂/Fe₂O₃ + SnO₂ + TiO₂
flocon de substrat + TiO₂/Fe₂O₃ + SnO₂ + TiO₂/Fe₂O₃
flocon de substrat + SnO₂ + TiO₂ + Fe₂O₃ + SnO₂ + TiO₂ + Fe₂O₃
flocon de substrat + Fe₂TiO₅ + SnO₂ + Fe₂TiO₅
flocon de substrat + Fe₂TiO₅ + SiO₂ + Fe₂TiO₅

11. Mélange de pigment(s)/fritte(s) selon une ou plusieurs des revendications 1 à 10, **caractérisé en ce que** les pigments perlés sur le flocon de substrat comportent une première couche à réfraction faible (= CRF) qui comprend de l'Al₂O₃, du SiO₂, du silicate de zirconium ZrSiO₄, de la mullite 3Al₂O₃ x 2SiO₂ ou 2Al₂O₃ x SiO₂ (mullite frittée ou fondue) ou du silicate de métal/métaux alcalino-terreux (MSiO₃, où M = Mg²⁺, Ca²⁺, Sr²⁺ ou Ba²⁺, ou M₂Si₃O₈, où M = Mg²⁺, Ca²⁺, Sr²⁺ ou Ba²⁺) et sont sélectionnés parmi le groupe de pigments qui suit :
flocon de substrat + CRF + TiO₂
flocon de substrat + CRF + Fe₂O₃
flocon de substrat + CRF + Fe₃O₄
flocon de substrat + CRF + TiO₂/Fe₂O₃
flocon de substrat + CRF + FeTiO₃
flocon de substrat + CRF + Fe₂TiO₅
flocon de substrat + CRF + ZrO₂
flocon de substrat + CRF + ZnO
flocon de substrat + CRF + SnO₂
flocon de substrat + CRF + Cr₂O₃
flocon de substrat + CRF + Ce₂O₃
flocon de substrat + CRF + TiOₓ (réduit), où x = 1,50 - 1,95
flocon de substrat + CRF + TiO₂ + Fe₂O₃
flocon de substrat + CRF + TiO₂ + Fe₃O₄
flocon de substrat + CRF + Fe₂O₃ + TiO₂
flocon de substrat + CRF + TiO₂ + SiO₂ + TiO₂
flocon de substrat + CRF + TiO₂ + SnO₂ + TiO₂
flocon de substrat + CRF + TiO₂ + Al₂O₃ + TiO₂
flocon de substrat + CRF + Fe₂O₃ + SiO₂ + TiO₂
flocon de substrat + CRF + TiO₂/Fe₂O₃ + SiO₂ + TiO₂
flocon de substrat + CRF + TiO₂/Fe₂O₃ + SiO₂ + TiO₂/Fe₂O₃
flocon de substrat + CRF + TiO₂/Fe₂O₃ + SiO₂ + TiO₂ + TiO₂/Fe₂O₃
flocon de substrat + CRF + TiO₂ + SiO₂ + TiO₂/Fe₂O₃
flocon de substrat + CRF + TiO₂ + SiO₂
flocon de substrat + CRF + TiO₂ + Al₂O₃
flocon de substrat + CRF + TiO₂ + MgO x SiO₂ + TiO₂
flocon de substrat + CRF + Fe₂O₃ + MgO x SiO₂ + TiO₂
flocon de substrat + CRF + TiO₂/Fe₂O₃ + MgO x SiO₂ + TiO₂
flocon de substrat + CRF + TiO₂/Fe₂O₃ + MgO x SiO₂ + TiO₂/Fe₂O₃
flocon de substrat + CRF + TiO₂/Fe₂O₃ + MgO x SiO₂ + TiO₂ + TiO₂/Fe₂O₃
flocon de substrat + CRF + TiO₂ + MgO x SiO₂ + TiO₂/Fe₂O₃
flocon de substrat + CRF + SnO₂ + TiO₂ + SiO₂ + SnO₂ + TiO₂
flocon de substrat + CRF + SnO₂ + TiO₂ + SnO₂ + TiO₂
flocon de substrat + CRF + SnO₂ + TiO₂ + Fe₂O₃ + SiO₂ + SnO₂ + TiO₂ + Fe₂O₃
flocon de substrat + CRF + Fe₂O₃ + SnO₂ + TiO₂
flocon de substrat + CRF + Fe₂O₃ + SnO₂ + Fe₂O₃
flocon de substrat + CRF + TiO₂ + SnO₂ + TiO₂
flocon de substrat + CRF + TiO₂/Fe₂O₃ + SnO₂ + TiO₂
flocon de substrat + CRF + TiO₂/Fe₂O₃ + SnO₂ + TiO₂/Fe₂O₃
flocon de substrat + CRF + SnO₂ + TiO₂ + Fe₂O₃ + SnO₂ + TiO₂ + Fe₂O₃
flocon de substrat + CRF + Fe₂TiO₅ + SnO₂ + Fe₂TiO₅
flocon de substrat + CRF + Fe₂TiO₅ + SiO₂ + Fe₂TiO₅

12. Utilisation du mélange de pigment(s)/fritte(s) selon une ou plusieurs des revendications 1 à 11 dans des briques en terre crue ou en terre cuite, des glacis à poterie et à faïence ou à céramique en terre crue ou en terre cuite.

13. Utilisation du mélange de pigment(s)/fritte(s) selon la revendication 12 pour les carreaux décoratifs.

14. Utilisation du mélange de pigment(s)/fritte(s) selon la revendication 12 pour les glacis à porcelaine.

15. Formulations comprenant le mélange de pigment(s)/fritte(s) selon une ou plusieurs des revendications 1 à 11.
